# EUROPEAN PATENT SPECIFICATION

(11) **EP 1 409 403 B1**
(45) Date of publication and mention of the grant of the patent: **08.10.2008**
(21) Application number: 02748046.6
(22) Date of filing: 03.07.2002
(51) Int. Cl.: B01J 29/70, B01J 29/86, C01B 39/48, C10G 47/12

(54) **ZEOLITE SSZ-57**
ZEOLITH SSZ-57
ZEOLITE SSZ-57

(30) Priority: 13.07.2001 US 905456; 13.07.2001 US 905457; 13.07.2001 US 905462
(43) Date of publication of application: 21.04.2004
(73) Proprietor: Chevron U.S.A. Inc., San Ramon, CA 94583 (US)
(72) Inventor: ELOMARI, Saleh, Richmond, CA 94804 (US)
(74) Representative: Nash, David Allan
(86) International application number: PCT/US2002/021022
(87) International publication number: WO 2003/006365

(56) References cited:
- US-A- 4 623 526
- US-A- 4 708 857
- BURTON A. AND ELOMARI S.: CHEM. COMMUN, 2004, pages 2618-2619, XP002312194

## Description

### BACKGROUND OF THE INVENTION

### Field of the Invention

The present invention relates to new crystalline zeolite SSZ-57 and a method for preparing SSZ-57 using a N-butyl-N-cyclohexylpyrrolidinium cation, N-propyl-N-cycloheptylpyrrolidinium cation or N-butyl-N-cyclooctylpyrrolidinium cation as templating agent.

### State of the Art

Because of their unique sieving characteristics, as well as their catalytic properties, crystalline molecular sieves and zeolites are especially useful in applications such as hydrocarbon conversion, gas drying and separation. Although many different crystalline molecular sieves have been disclosed, there is a continuing need for new zeolites with desirable properties for gas separation and drying, hydrocarbon and chemical conversions, and other applications. New zeolites may contain novel internal pore architectures, providing enhanced selectivities in these processes.

Crystalline aluminosilicates are usually prepared from aqueous reaction mixtures containing alkali or alkaline earth metal oxides, silica, and alumina.

Crystalline borosilicates are usually prepared under similar reaction conditions except that boron is used in place of aluminum. By varying the synthesis conditions and the composition of the reaction mixture, different zeolites can often be formed.

US 4,708,857 describes a crystalline ironborosilicate which comprises a molecular sieve material having the following composition in terms of mole ratios of oxides: 1.0±0.3M_{n/2}O; (a Fe₂O₃:b B₂O₃):y SiO₂.z H₂O wherein M is at least one cation having a valence n, a is greater than zero but less than 1, b is greater than zero but less than 1 such that a+b=1, y is a value of at least 6, and z is a value within the range of 0 to about 500 and giving a specific X-Ray diffraction pattern. The crystalline ironborosilicate is used to catalyze various processes such as the conversion of simple alcohols to high-octane gasoline, and the catalytic hydrogenation of carbon monoxide for the production of high-octane liquid hydrocarbons. The preparation of the ironborosilicate is also described.

US4623526 describes a crystalline titanoborosilicate which comprises a molecular sieve material having the following composition in terms of mole ratios of oxide: 0.9±0.2M_{2/n}O: aTiO₂:bB₂O₃: ySiO₂.zH₂O wherein M is at least one cation having a valence n, a is greater than zero but less than 1, b is greater than zero but less than 1 such that a+b=1, y is a value within the range of 8 to about 500, and z is a value within the range of 0 to about 100 and giving a specific X-ray diffraction pattern. The crystalline titanoborosilicate is used to catalyze various processes such as conversion of simple alcohols into liquid hydrocarbons having boiling points within the gasoline boiling range, aromatization, and alkylation. A process of preparing the crystalline titanoborosilicate is also described.

### SUMMARY OF THE INVENTION

The present invention is directed to a family of crystalline molecular sieves with unique properties, referred to herein as "zeolite SSZ-57"or simply "SSZ-57". Preferably, SSZ-57 is obtained in its borosilicate form, but the present novel zeolite can be synthesized in both the borosilicate or aluminosilicate phase. The term "borosilicate" refers to a zeolite containing oxides of both boron and silicon. The term "aluminosilicate" refers to a zeolite containing oxides of both aluminum and silicon.

In accordance with a first aspect of the present invention, there is provided a zeolite having a mole ratio greater than about 20 of an oxide selected from silicon oxide, germanium oxide and mixtures thereof to an oxide selected from boron oxide, aluminium oxide, gallium oxide, indium oxide, indium oxide, titanium oxide or a mixture thereof and having, after calcination, the X-ray diffraction lines of Table 3 below.

The oxides may comprise an oxide selected from silicon oxide, germanium oxide and mixtures thereof and boron oxide or a combination of boron oxide and aluminum oxide, gallium oxide, indium oxide, titanium oxide or a mixture thereof.

In accordance with the first aspect, the present invention further provides such a zeolite having a composition, as synthesized and in the anhydrous state, in terms of mole ratios as follows:
YO₂/W_{c}O_{d} 20-∞
M_{2/n}/YO₂ 0.01 - 0.03
Q/YO₂ 0.02-0.05
wherein Y is silicon, germanium or a mixture thereof; W is boron or a combination of boron and aluminum, gallium, indium, titanium or a mixture thereof; M is an alkali metal cation, alkaline earth metal cation or mixtures thereof; n is the valence of M (i.e., 1 or 2); c is 1 or 2; d is 2 when c is 1 (i.e., W is tetravalent) or d is 3 or 5 when c is 2 (i.e., d is 3 when W is trivalent or 5 when W is pentavalent); and Q comprises a N-butyl-N-cyclohexylpyrrolidinium cation, N-propyl-N-cycloheptylpyrrolidinium cation or N-butyl-N-cyclooctylpyrrolidinium.

The zeolite may be prepared by thermally treating a zeolite having a mole ratio of an oxide selected from silicon oxide, germanium oxide and mixtures thereof to boron oxide or a combination of boron oxide and aluminum oxide, gallium oxide, indium oxide, titanium oxide or a mixture thereof greater than about 20 at a temperature of from about 200°C to about 1100°C, the thus-prepared zeolite having the X-ray diffraction lines of Table 3 below. The present invention also includes this thus-prepared zeolite which is predominantly in the hydrogen form, which is prepared by ion exchanging with an acid or with a solution of an ammonium salt followed by a second calcination.

In accordance with a second aspect of the present invention, there is provided a method of preparing a crystalline material corresponding to the zeolite of the first aspect of the invention comprising an oxide selected from silicon oxide germanium oxide and mixtures thereof and boron oxide or a combination of boron oxide and aluminum oxide, gallium oxide, indium oxide, titanium oxide or a mixture thereof, said method comprising contacting under crystallization conditions sources of said oxides and a templating agent comprising a N-butyl-N-cyclohexylpyrrolidinium cation, N-propyl-N-cycloheptylpyrrolidinium cation or N-butyl-N-cyclooctylpyrrolidinium.

In accordance with a third aspect, the present invention provides a process for converting hydrocarbons comprising contacting a hydrocarbonaceous feed at hydrocarbon converting conditions with a catalyst comprising the zeolite of this invention. The zeolite may be predominantly in the hydrogen form. It may also be substantially free of acidity.

The process may be a hydrocracking process comprising contacting a hydrocarbon feedstock under hydrocracking conditions with a catalyst comprising the zeolite of this invention, preferably predominantly in the hydrogen form.

The process may be a dewaxing process comprising contacting a hydrocarbon feedstock under dewaxing conditions with a catalyst comprising the zeolite of this invention, preferably predominantly in the hydrogen form.

The process may be a process for improving the viscosity index of a dewaxed product of waxy hydrocarbon feeds comprising contacting the waxy hydrocarbon feed under isomerization dewaxing conditions with a catalyst comprising the zeolite of this invention, preferably predominantly in the hydrogen form.

The process may be a process for producing a C₂₀+ lube oil from a C₂₀+ olefin feed comprising isomerizing said olefin feed under isomerization conditions over a catalyst comprising at least one Group VIII metal and the zeolite of this invention. The zeolite may be predominantly in the hydrogen form.

The process may be a process for catalytically dewaxing a hydrocarbon oil feedstock boiling above about 350°F (177°C) and containing straight chain and slightly branched chain hydrocarbons comprising contacting said hydrocarbon oil feedstock in the presence of added hydrogen gas at a hydrogen pressure of about 15-3000psi (0.10-20.7 MPa) with a catalyst comprising at least one Group VIII metal and the zeolite of this invention, preferably predominantly in the hydrogen form. The catalyst may be a layered catalyst comprising a first layer comprising at least one Group VIII metal and the zeolite of this invention, and a second layer comprising an aluminosilicate zeolite which is more shape selective than the zeolite of said first layer.

The process may be a process for preparing a lubricating oil which comprises hydrocracking in a hydrocracking zone a hydrocarbonaceous feedstock to obtain an effluent comprising a hydrocracked oil, and catalytically dewaxing said effluent comprising hydrocracked oil at a temperature of at least about 400°F (204°C) and at a gauge pressure of from about 15 psi (0.10MPa) to about 3000 psi (20.7 MPa) in the presence of added hydrogen gas with a catalyst comprising at least one Group VIII metal and the zeolite of this invention. The zeolite may be predominantly in the hydrogen form.

The process may be a process for isomerization dewaxing a raffinate comprising contacting said raffinate in the presence of added hydrogen with a catalyst comprising at least one Group VIII metal and the zeolite of this invention. The raffinate may be bright stock, and the zeolite may be predominantly in the hydrogen form.

The process may be a process for increasing the octane of a hydrocarbon feedstock to produce a product having an increased aromatics content comprising contacting a hydrocarbonaceous feedstock which comprises normal and slightly branched hydrocarbons having a boiling range above about 40°C and less than about 200°C, under aromatic conversion conditions with a catalyst comprising the zeolite of this invention made substantially free of acidity by neutralizing said zeolite with a basic metal. Also provided in this invention is such a process wherein the zeolite contains a Group VIII metal component.

The process may be a catalytic cracking process comprising contacting a hydrocarbon feedstock in a reaction zone under catalytic cracking conditions in the absence of added hydrogen with a catalyst comprising the zeolite of this invention, preferably predominantly in the hydrogen form. Also included in this invention is such a catalytic cracking process wherein the catalyst additionally comprises a large pore crystalline cracking component.

The process may be an isomerization process for isomerizing C₄ to C₇ hydrocarbons, comprising contacting a feed having normal and slightly branched C₄ to C₇ hydrocarbons under isomerizing conditions with a catalyst comprising the zeolite of this invention, preferably predominantly in the hydrogen form. The zeolite may be impregnated with at least one Group VIII metal, preferably platinum. The catalyst may be calcined in a steam/air mixture at an elevated temperature after impregnation of the Group VIII metal.

The process may be a process for alkylating an aromatic hydrocarbon which comprises contacting under alkylation conditions at least a molar excess of an aromatic hydrocarbon with a C₂ to C₂₀ olefin under at least partial liquid phase conditions and in the presence of a catalyst comprising the zeolite of this invention, preferably predominantly in the hydrogen form. The olefin may be a C₂ to C₄ olefin, and the aromatic hydrocarbon and olefin may be present in a molar ratio of about 4:1 to about 20:1, respectively. The aromatic hydrocarbon may be selected from the group consisting of benzene, toluene, ethylbenzene, xylene, naphthalene, dimethylnaphthalene, naphthalene derivatives or mixtures thereof.

The process may be a process for transalkylating an aromatic hydrocarbon which comprises contacting under transalkylating conditions an aromatic hydrocarbon with a polyalkyl aromatic hydrocarbon under at least partial liquid phase conditions and in the presence of a catalyst comprising the zeolite of this invention, preferably predominantly in the hydrogen form. The aromatic hydrocarbon and the polyalkyl aromatic hydrocarbon may be present in a molar ratio of from about 1:1 to about 25:1, respectively.

The aromatic hydrocarbon may be selected from the group consisting of benzene, toluene, ethylbenzene, xylene, or mixtures thereof, and the polyalkyl aromatic hydrocarbon may be a dialkylbenzene.

The process may be a process to convert paraffins to aromatics which comprises contacting paraffins under conditions which cause paraffins to convert to aromatics with a catalyst comprising the zeolite of this invention, said catalyst comprising gallium, zinc, or a compound of gallium or zinc.

The process may be a process for isomerizing olefins comprising contacting said olefin under conditions which cause isomerization of the olefin with a catalyst comprising the zeolite of this invention.

The process may be a process for isomerizing an isomerization feed comprising an aromatic C₈ stream of xylene isomers or mixtures of xylene isomers and ethylbenzene, wherein a more nearly equilibrium ratio of ortho-, meta- and para-xylenes is obtained, said process comprising contacting said feed under isomerization conditions with a catalyst comprising the zeolite of this invention.

The process may be a process for oligomerizing olefins comprising contacting an olefin feed under oligomerization conditions with a catalyst comprising the zeolite of this invention.

The process may be a process for the production of higher molecular weight hydrocarbons from lower molecular weight hydrocarbons comprising the steps of:
(a) introducing into a reaction zone a lower molecular weight hydrocarbon-containing gas and contacting said gas in said zone under C₂₊ hydrocarbon synthesis conditions with the catalyst and a metal or metal compound capable of converting the lower molecular weight hydrocarbon to a higher molecular weight hydrocarbon; and
(b) withdrawing from said reaction zone a higher molecular weight hydrocarbon-containing stream.

This invention also provides a process for converting lower alcohols and other oxygenated hydrocarbons comprising contacting said lower alcohol or other oxygenated hydrocarbon with a catalyst comprising the zeolite of this invention under conditions to produce liquid products.

This invention also provides a process for the reduction of oxides of nitrogen contained in a gas stream in the presence of oxygen wherein said process comprises contacting the gas stream with a zeolite defined above. The zeolite may contain a metal or metal ions (such as cobalt, copper or mixtures thereof) capable of catalyzing the reduction of the oxides of nitrogen, and may be conducted in the presence of a stoichiometric excess of oxygen. In a preferred embodiment, the gas stream is the exhaust stream of an internal combustion engine.

### DETAILED DESCRIPTION OF THE INVENTION

The present invention comprises a family of crystalline zeolites designated herein "zeolite SSZ-57" or simply "SSZ-57".

In preparing SSZ-57 zeolites, a N-cyclohexyl-N-butylpyrrolidinium ammonium cation, N-propyl-N-cycloheptylpyrrolidinium cation or N-butyl-N-cyclooctylpyrrolidinium is used as a crystallization template. In general, SSZ-57 is prepared by contacting an active source of an oxide selected from silicon oxide, germanium oxide and mixtures thereof and boron oxide or a combination of boron oxide and aluminum oxide, gallium oxide, indium oxide, titanium oxide or a mixture thereof with the templating agent.

SSZ-57 may be prepared from a reaction mixture having the composition shown in Table A below.

**TABLE A**

| Reaction Mixture | | |
|---|---|---|
| | Typical | Preferred |
| YO₂/WₐO_{b} | 20-∝ | 35-90 |
| OH-/YO₂ | 0.1-0.50 | 0.2-0.3 |
| Q/YO₂ | 0.05-0.5 | 0.1-0.2 |
| M_{2/n}/YO₂ | 0.02-0.4 | 0.1-0.25 |
| H₂O/YO₂ | 25-80 | 30-50 |

where Y, W, Q, M and n are as defined above, and a is 1 or 2 and b is 2 when a is 1 (i.e., W is tetravalent) or b is 3 when a is 2 (i.e., W is trivalent).

In practice, SSZ-57 is prepared by a process comprising:
(a) preparing an aqueous solution containing sources of at least one oxide capable of forming a crystalline molecular sieve and the N-butyl-N-cyclohexylpyrrolidinium cation, N-propyl-N-cycloheptylpyrrolidinium cation or N-butyl-N-cyclooctylpyrrolidinium in the presence of an anionic counterion which is not detrimental to the formation of SSZ-57;
(b) maintaining the aqueous solution under conditions sufficient to form crystals of SSZ-57; and
(c) recovering the crystals of SSZ-57.

Accordingly, SSZ-57 may comprise the crystalline material and the templating agent in combination with metallic and non-metallic oxides bonded in tetrahedral coordination through shared oxygen atoms to form a cross-linked three dimensional crystal structure. The metallic and non-metallic oxides comprise an oxide selected from silicon oxide, germanium oxide and mixtures thereof and boron oxide or a combination of boron oxide and aluminum oxide, gallium oxide, indium oxide, titanium oxide or a mixture thereof.

Typical sources of silicon oxide include silicates, silica hydrogel, silicic acid, fumed silica, colloidal silica, tetra-alkyl orthosilicates, and silica hydroxides. Boron, as well as aluminum, gallium, germanium, titanium, and indium can be added in forms corresponding to their silicon counterparts.

A source zeolite reagent may provide a source of boron. In most cases, the source zeolite also provides a source of silica. The source zeolite in its dealuminated or deboronated form may also be used as a source of silica, with additional silicon added using, for example, the conventional sources listed above. Use of a source zeolite reagent as a source of alumina for the present process is more completely described in U.S. Patent No. 5,225,179, issued July 6, 1993 to Nakagawa entitled "Method of Making Molecular Sieves".

Typically, an alkali metal hydroxide and/or an alkaline earth metal hydroxide, such as the hydroxide of sodium, potassium, lithium, cesium, rubidium, calcium, and magnesium, is used in the reaction mixture; however, this component can be omitted so long as the equivalent basicity is maintained. The templating agent may be used to provide hydroxide ion. Thus, it may be beneficial to ion exchange, for example, the halide for hydroxide ion, thereby reducing or eliminating the alkali metal hydroxide quantity required. The alkali metal cation or alkaline earth cation may be part of the as-synthesized crystalline oxide material, in order to balance valence electron charges therein.

The reaction mixture is maintained at an elevated temperature until the crystals of the SSZ-57 zeolite are formed. The hydrothermal crystallization is usually conducted under autogenous pressure, at a temperature between 100°C and 200°C, preferably between 135°C and 160°C. The crystallization period is typically greater than 1 day and preferably from about 3 days to about 20 days.

Preferably, the zeolite is prepared using mild stirring or agitation.

During the hydrothermal crystallization step, the SSZ-57 crystals can be allowed to nucleate spontaneously from the reaction mixture. The use of SSZ-57 crystals as seed material can be advantageous in decreasing the time necessary for complete crystallization to occur. In addition, seeding can lead to an increased purity of the product obtained by promoting the nucleation and/or formation of SSZ-57 over any undesired phases. When used as seeds, SSZ-57 crystals are added in an amount between 0.1 and 10% of the weight of silica used in the reaction mixture.

Once the zeolite crystals have formed, the solid product is separated from the reaction mixture by standard mechanical separation techniques such as filtration. The crystals are water-washed and then dried, e.g., at 90°C to 150°C for from 8 to 24 hours, to obtain the as-synthesized SSZ-57 zeolite crystals. The drying step can be performed at atmospheric pressure or under vacuum.

SSZ-57, as prepared, has a mole ratio of an oxide selected from silicon oxide, germanium oxide and mixtures thereof to boron oxide or a combination of boron oxide and aluminum oxide, gallium oxide, indium oxide, titanium oxide or a mixture thereof greater than about 20; and has the X-ray diffraction lines of Table I below. SSZ-57 further has a composition, as-synthesized and in the anhydrous state, in terms of mole ratios, shown in Table B below.

**TABLE B**

| As-Synthesized SSZ-57 | |
|---|---|
| YO₂/W_{c}O_{d} | 20-∝ |
| M_{2/n}/YO₂ | 0.01-0.03 |
| Q/YO₂ | 0.02-0.05 |

where Y, W, c, d, M, n and Q are as defined above.

SSZ-57 can be made essentially aluminum free, i.e., having a silica to alumina mole ratio approaching ∞. A method of increasing the mole ratio of silica to alumina is by using standard acid leaching or chelating treatments. However, essentially aluminum-free SSZ-57 can be synthesized directly using essentially aluminum-free silicon and boron sources. SSZ-57 is generally prepared directly as a borosilicate.

Lower silica to alumina ratios may also be obtained by using methods which insert aluminum into the crystalline framework. For example, aluminum insertion may occur by thermal treatment of the zeolite in combination with an alumina binder or dissolved source of alumina. Such procedures are described in U.S. Patent No. 4,559,315, issued on December 17, 1985 to Chang et al.

It is believed that SSZ-57 is comprised of a new framework structure or topology which is characterized by its X-ray diffraction pattern. SSZ-57 zeolites, as-synthesized, have a crystalline structure whose X-ray powder diffraction pattern exhibit the characteristic lines shown in Table 1 and is thereby distinguished from other zeolites.

**TABLE 1**

| As-Synthesized SSZ-57 | | |
|---|---|---|
| Two Theta (deg.)^{(a)} | d-spacing | Intensity I/Iₒ^{(b)} |
| 7.7+/-0.15□ | 11.5 | S |
| 8.8 | 10.0 | M |
| 14.65 | 6.04 | W |
| 15.55 | 5.69 | W |
| 17.65 | 5.02 | W |
| 20.85 | 4.26 | W |
| 23.05 | 3.86 | VS |
| 24.35 | 3.65 | M |
| 26.6 | 3.35 | W |
| 30.2 | 2.96 | W |
| 45.1 | 2.10 | W |

| | | |
|---|---|---|
| (a)±0.15 (b) The X-ray patterns provided are based on a relative intensity scale in which the strongest line in the X-ray pattern is assigned a value of 100: W(weak) is less than 20; M(medium) is between 20 and 40; S(strong) is between 40 and 60; VS(very strong) is greater than 60. | | |

The complete X-ray diffraction pattern of a boron SSZ-57 zeolite is shown in Table 2 below:

**TABLE 2**

| Data for the As-Synthesized SSZ-57 | | |
|---|---|---|
| 2 Theta (deg.)^{(a)} | d-spacing (Å) | Intensity I/Io x 100 |
| 7.74 | 11.413 | 32 |
| 8.78 | 10.063 | 22 |
| 11.72 | 7.545 | 7 |
| 12.42 | 7.121 | 5 |
| 13.86 | 6.384 | 2 |
| 14.26 | 6.206 | 3 |
| 14.66 | 6.038 | 4 |
| 15.56 | 5.690 | 4 |
| 17.14 | 5.169 | 3 |
| 17.64 | 5.024 | 3 |
| 18.96 | 4.677 | 3 |
| 19.28 | 4.600 | 1 |
| 19.76 | 4.489 | 2 |
| 20.86 | 4.255 | 4 |
| 21.82 | 4.070 | 1 |
| 23.04 | 3.857 | 100 |
| 23.44 | SH 3.792 | 5 |
| 24.32 | 3.657 | 12 |
| 25.98 | 3.427 | 3 |
| 26.62 | 3.346 | 5 |
| 27.75 | 3.212 | 1 |
| 28.96 | 3.081 | 3 |
| 29.46 | 3.030 | 2 |
| 30.22 | 2.955 | 6 |
| 31.54 | 2.834 | 1 |
| 32.36 | 2.764 | 1 |
| 34.10 | 2.627 | 2 |
| 35.40 | 2.534 | 2 |
| 35.76 | 2.509 | 2 |
| 36.18 | 2.481 | 2 |
| 36.90 | 2.434 | 1 |
| 37.64 | 2.388 | 1 |
| 43.24 | 2.091 | 1 |
| 45.12 | 2.008 | 7 |
| 45.30 | SH 2.000 | 4 |
| 47.52 | 1.912 | 1 |
| 48.52 | 1.875 | 2 |

| | | |
|---|---|---|
| SH = Shoulder ^{(a)}± 0.15 | | |

After calcination, the SSZ-57 zeolites have a crystalline structure whose X-ray powder diffraction pattern include the characteristic lines shown in Table 3:

**TABLE 3**

| Calcined SSZ-57 | | |
|---|---|---|
| Two Theta (deg.)^{(a)} | d-spacing (Å) | Intensity I/Io |
| 7.7 | 11.5 | VS |
| 8.8 | 10.0 | VS |
| 14.7 | 6.02 | M |
| 15.55 | 5.69 | W |
| 17.65 | 5.02 | W |
| 20.8 | 4.27 | W |
| 23.10 | 3.85 | VS |
| 24.4 | 3.65 | M |
| 26.65 | 3.34 | W |
| 30.25 | 2.95 | W |
| 45.25 | 2.00 | W |

| | | |
|---|---|---|
| ^{(a)} ± 0.15 | | |

The complete X-ray diffraction pattern for an SSZ-57 calcined zeolite is shown in Table 4:

**TABLE 4**

| Calcined SSZ-57 | | |
|---|---|---|
| 2 Theta (deg.)^{(a)} | d-spacing (Å) | Intensity I/Io x 100 |
| 7.72 | 11.443 | 100 |
| 8.78 | 10.063 | 74 |
| 11.74 | 7.532 | 2 |
| 12.43 | 7.115 | 2 |
| 13.84 | 6.393 | 3 |
| 14.24 | 6.215 | 1 |
| 14.70 | 6.021 | 17 |
| 15.56 | 5.690 | 8 |
| 17.16 | 5.163 | 1 |
| 17.66 | 5.018 | 11 |
| 19.00 | 4.667 | 2 |
| 19.32 | 4.591 | 1 |
| 19.74 | 4.494 | 2 |
| 20.82 | 4.263 | 3 |
| 23.08 | 3.850 | 91 |
| 23.48 | SH 3.786 | 5 |
| 24.36 | 3.651 | 11 |
| 25.05 | 3.552 | 1 |
| 26.04 | 3.419 | 4 |
| 26.66 | 3.341 | 6 |
| 29.00 | 3.076 | 3 |
| 29.52 | 3.023 | 2 |
| 30.26 | 2.951 | 7 |
| 31.56 | 2.833 | 1 |
| 31.90 | 2.803 | 1 |
| 34.20 | 2.620 | 2 |
| 35.46 | 2.529 | 1 |
| 35.84 | 2.503 | 2 |
| 36.28 | 2.474 | 1 |
| 36.96 | 2.430 | 1 |
| 37.76 | 2.380 | 1 |
| 43.97 | 2.058 | 1 |
| 45.26 | 2.002 | 16 |
| 46.22 | 1.962 | 1 |
| 47.58 | 1.910 | 1 |
| 48.60 | 1.872 | 1 |

| | | |
|---|---|---|
| SH = Shoulder (a) ± 0.15 | | |

The X-ray powder diffraction patterns were determined by standard techniques. The radiation was the K-alpha/doublet of copper. The peak heights and the positions, as a function of 2 Theta where Theta is the Bragg angle, were read from the relative intensities of the peaks, and d, the interplanar spacing in Angstroms corresponding to the recorded lines, can be calculated.

The variation in the scattering angle (two theta) measurements, due to instrument error and to differences between individual samples, is estimated at ±0.15 degrees.

The X-ray diffraction pattern of Table 1 is representative of "as-synthesized" or "as-made" SSZ-57 zeolites. Minor variations in the diffraction pattern can result from variations in the silica-to-boron or silica-to-alumina mole ratio of the particular sample due to changes in lattice constants. In addition, sufficiently small crystals will affect the shape and intensity of peaks, leading to significant peak broadening.

Representative peaks from the X-ray diffraction pattern of calcined SSZ-57 are shown in Table 3. Calcination can also result in changes in the intensities of the peaks as compared to patterns of the "as-made" material, as well as minor shifts in the diffraction pattern. The zeolite produced by exchanging the metal or other cations present in the zeolite with various other cations (such as H+ or NH4+) yields essentially the same diffraction pattern, although again, there may be minor shifts in the interplanar spacing and variations in the relative intensities of the peaks. Notwithstanding these minor perturbations, the basic crystal lattice remains unchanged by these treatments.

Crystalline SSZ-57 can be used as-synthesized, but preferably will be thermally treated (calcined). Usually, it is desirable to remove the alkali metal cation by ion exchange and replace it with hydrogen, ammonium, or any desired metal ion. The zeolite can be leached with chelating agents, e.g., EDTA or dilute acid solutions, to increase the silica to alumina mole ratio. The zeolite can also be steamed; steaming helps stabilize the crystalline lattice to attack from acids.

The zeolite can be used in intimate combination with hydrogenating components, such as tungsten, vanadium molybdenum, rhenium, nickel cobalt, chromium, manganese, or a noble metal, such as palladium or platinum, for those applications in which a hydrogenation-dehydrogenation function is desired.

Metals may also be introduced into the zeolite by replacing some of the cations in the zeolite with metal cations via standard ion exchange techniques (see, for example, U.S. Patent Nos. 3,140,249 issued July 7, 1964 to Plank et al.; 3,140,251 issued July 7, 1964 to Plank et al.; and 3,140,253 issued July 7, 1964 to Plank et al.). Typical replacing cations can include metal cations, e.g., rare earth, Group IA, Group IIA and Group VIII metals, as well as their mixtures. Of the replacing metallic cations, cations of metals such as rare earth, Mn, Ca, Mg, Zn, Cd, Pt, Pd, Ni, Co, Ti, Al, Sn, and Fe are particularly preferred.

The hydrogen, ammonium, and metal components can be ion-exchanged into the SSZ-57. The zeolite can also be impregnated with the metals, or the metals can be physically and intimately admixed with the zeolite using standard methods known to the art.

Typical ion-exchange techniques involve contacting the synthetic zeolite with a solution containing a salt of the desired replacing cation or cations. Although a wide variety of salts can be employed, chlorides and other halides, acetates, nitrates, and sulfates are particularly preferred. The zeolite is usually calcined prior to the ion-exchange procedure to remove the organic matter present in the channels and on the surface, since this results in a more effective ion exchange. Representative ion exchange techniques are disclosed in a wide variety of patents including U.S. Patent Nos. 3,140,249 issued on July 7, 1964 to Plank et al.; 3,140,251 issued on July 7, 1964 to Plank et al.; and 3,140,253 issued on July 7, 1964 to Plank et al.

Following contact with the salt solution of the desired replacing cation, the zeolite is typically washed with water and dried at temperatures ranging from 65°C to about 200°C. After washing, the zeolite can be calcined in air or inert gas at temperatures ranging from about 200°C to about 800°C for periods of time ranging from 1 to 48 hours, or more, to produce a catalytically active product especially useful in hydrocarbon conversion processes.

Regardless of the cations present in the synthesized form of SSZ-57, the spatial arrangement of the atoms which form the basic crystal lattice of the zeolite remains essentially unchanged.

SSZ-57 can be formed into a wide variety of physical shapes. Generally speaking, the zeolite can be in the form of a powder, a granule, or a molded product, such as extrudate having a particle size sufficient to pass through a 2-mesh (Tyler) screen and be retained on a 400-mesh (Tyler) screen. In cases where the catalyst is molded, such as by extrusion with an organic binder, the aluminosilicate can be extruded before drying, or dried or partially dried and then extruded.

SSZ-57 can be composited with other materials resistant to the temperatures and other conditions employed in organic conversion processes. Such matrix materials include active and inactive materials and synthetic or naturally occurring zeolites as well as inorganic materials such as clays, silica and metal oxides. Examples of such materials and the manner in which they can be used are disclosed in U.S. Patent No.4,910,006, issued May 20, 1990 to Zones et al., and U.S. Patent No. 5,316,753, issued May 31, 1994 to Nakagawa.

### Hydrocarbon Conversion Processes

SSZ-57 zeolites are useful in hydrocarbon conversion reactions. Hydrocarbon conversion reactions are chemical and catalytic processes in which carbon containing compounds are changed to different carbon containing compounds. Examples of hydrocarbon conversion reactions in which SSZ-57 are expected to be useful include hydrocracking, dewaxing, catalytic cracking and olefin and aromatics formation reactions. The catalysts are also expected to be useful in other petroleum refining and hydrocarbon conversion reactions such as isomerizing n-paraffins and naphthenes, polymerizing and oligomerizing olefinic or acetylenic compounds such as isobutylene and butene-1, reforming, isomerizing polyalkyl substituted aromatics (e.g., m-xylene), and disproportionating aromatics (e.g., toluene) to provide mixtures of benzene, xylenes and higher methylbenzenes and oxidation reactions. Also included are rearrangement reactions to make various naphthalene derivatives, and forming higher molecular weight hydrocarbons from lower molecular weight hydrocarbons (e.g., methane upgrading). The SSZ-57 catalysts may have high selectivity, and under hydrocarbon conversion conditions can provide a high percentage of desired products relative to total products.

SSZ-57 zeolites can be used in processing hydrocarbonaceous feedstocks. Hydrocarbonaceous feedstocks contain carbon compounds and can be from many different sources, such as virgin petroleum fractions, recycle petroleum fractions, shale oil, liquefied coal, tar sand oil, synthetic paraffins from NAO, recycled plastic feedstocks and, in general, can be any carbon containing feedstock susceptible to zeolitic catalytic reactions. Depending on the type of processing the hydrocarbonaceous feed is to undergo, the feed can contain metal or be free of metals; it can also have high or low nitrogen or sulfur impurities. It can be appreciated, however, that in general processing will be more efficient (and the catalyst more active) the lower the metal, nitrogen, and sulfur content of the feedstock.

The conversion of hydrocarbonaceous feeds can take place in any convenient mode, for example, in fluidized bed, moving bed, or fixed bed reactors depending on the types of process desired. The formulation of the catalyst particles will vary depending on the conversion process and method of operation.

Other reactions which can be performed using the catalyst of this invention containing a metal, e.g., a Group VIII metal such as platinum, include hydrogenation-dehydrogenation reactions, denitrogenation and desulfurization reactions.

The following Table III indicates typical reaction conditions which may be employed when using catalysts comprising SSZ-57 in the hydrocarbon conversion reactions of this invention. Preferred conditions are indicated in parentheses.

**Table III**

| Process | Temp.,°C | Pressure | LHSV |
|---|---|---|---|
| Hydrocracking | 175-485 | 0.5-350 bar | 0.1-30 |
| Dewaxing | 200-475 | 15-3000 psig | 0.1-20 |
| | (250-450) | (200-3000) | (0.2-10) |
| Aromatics formation | 400-600 | atm.-10 bar | 0.1-15 |
| | (480-550) | | |
| Cat. cracking | 127-885 | subatm.-¹ | 0.5-50 |
| | | (atm.-5 atm.) | |
| Oligomerization | 232-649² | 0.1-50 atm.^{2,3} | 0.2-50² |
| | 10-232⁴ | - | 0.05-20⁵ |
| | (27-204)⁴ | - | (0.1-10)⁵ |
| Paraffins to aromatics | 100-700 | 0-1000 psig | 0.5-40⁵ |
| Condensation of alcohols | 260-538 | 0.5-1000 psig | 0.5-50⁵ |
| Isomerization | 93-538 | 50-1000 psig | 1-10 |
| | (204-315) | | (1-4) |
| Xylene isomerization | 260-593² | 0.5-50 atm.² | 0.1-100⁵ |
| | (315-566)² | (1-5 atm)² | (0.5-50)⁵ |
| | 38-371⁴ | 1-200 atm.⁴ | 0.5-50 |
| Liquid Phase Alkylation of Aromatics by Small Olefins | | | 0.5 to 50⁵ |
| | 37-315 | 50-1000 psig | |

| | | | |
|---|---|---|---|
| ¹ Several hundred atmospheres ² Gas phase reaction ³ Hydrocarbon partial pressure ⁴ Liquid phase reaction ⁵ WHSV | | | |

Other reaction conditions and parameters are provided below.

### Hydrocracking

Using a catalyst which comprises SSZ-57, preferably predominantly in the hydrogen form, and a hydrogenation promoter, heavy petroleum residual feedstocks, cyclic stocks and other hydrocrackate charge stocks can be hydrocracked using the process conditions and catalyst components disclosed in the aforementioned U.S. Patent No. 4,910,006 and U.S. Patent No. 5,316,753.

The hydrocracking catalysts contain an effective amount of at least one hydrogenation component of the type commonly employed in hydrocracking catalysts. The hydrogenation component is generally selected from the group of hydrogenation catalysts consisting of one or more metals of Group VIB and Group VIII, including the salts, complexes and solutions containing such. The hydrogenation catalyst is preferably selected from the group of metals, salts and complexes thereof of the group consisting of at least one of platinum, palladium, rhodium, iridium, ruthenium and mixtures thereof or the group consisting of at least one of nickel, molybdenum, cobalt, tungsten, titanium, chromium and mixtures thereof. Reference to the catalytically active metal or metals is intended to encompass such metal or metals in the elemental state or in some form such as an oxide, sulfide, halide, carboxylate and the like. The hydrogenation catalyst is present in an effective amount to provide the hydrogenation function of the hydrocracking catalyst, and preferably in the range of from 0.05 to 25% by weight.

### Dewaxing

SSZ-57, preferably predominantly in the hydrogen form, can be used to dewax hydrocarbonaceous feeds by selectively removing straight chain paraffins. Typically, the viscosity index of the dewaxed product is improved (compared to the waxy feed) when the waxy feed is contacted with SSZ-57 under isomerization dewaxing conditions.

The catalytic dewaxing conditions are dependent in large measure on the feed used and upon the desired pour point. Hydrogen is preferably present in the reaction zone during the catalytic dewaxing process. The hydrogen to feed ratio is typically between about 500 and about 30,000 SCF/bbl (standard cubic feet per barrel) (89-5340 litre H₂/litre of feed), preferably about 1000 to about 20,000 SCF/bbl (178-3560 litre H₂/litre of feed). Generally, hydrogen will be separated from the product and recycled to the reaction zone. Typical feedstocks include light gas oil, heavy gas oils and reduced crudes boiling above about 350°F (177°C).

A typical dewaxing process is the catalytic dewaxing of a hydrocarbon oil feedstock boiling above about 350°F (177°C) and containing straight chain and slightly branched chain hydrocarbons by contacting the hydrocarbon oil feedstock in the presence of added hydrogen gas at a hydrogen pressure of about 15-3000 psi (0.10-20.7 MPa) with a catalyst comprising SSZ-57 and at least one Group VIII metal.

The SSZ-57 hydrodewaxing catalyst may optionally contain a hydrogenation component of the type commonly employed in dewaxing catalysts. See the aforementioned U.S. Patent No. 4,910,006 and U.S. Patent No. 5,316,753 for examples of these hydrogenation components.

The hydrogenation component is present in an effective amount to provide an effective hydrodewaxing and hydroisomerization catalyst preferably in the range of from about 0.05 to 5% by weight. The catalyst may be run in such a mode to increase isodewaxing at the expense of cracking reactions.

The feed may be hydrocracked, followed by dewaxing. This type of two-stage process and typical hydrocracking conditions are described in U.S. Patent No. 4,921,594, issued May 1, 1990 to Miller.

SSZ-57 may also be utilized as a dewaxing catalyst in the form of a layered catalyst. That is, the catalyst comprises a first layer comprising zeolite SSZ-57 and at least one Group VIII metal, and a second layer comprising an aluminosilicate zeolite which is more shape selective than zeolite SSZ-56. The use of layered catalysts is disclosed in U.S. Patent No. 5,149,421, issued September 22, 1992 to Miller. The layering may also include a bed of SSZ-57 layered with a non-zeolitic component designed for either hydrocracking or hydrofinishing.

SSZ-57 may also be used to dewax raffinates, including bright stock, under conditions such as those disclosed in U. S. Patent No. 4,181,598, issued January 1, 1980 to Gillespie et al.

It is often desirable to use mild hydrogenation (sometimes referred to as hydrofinishing) to produce more stable dewaxed products. The hydrofinishing step can be performed either before or after the dewaxing step, and preferably after. Hydrofinishing is typically conducted at temperatures ranging from about 190°C to about 340°C at gauge pressures from about 400 psi (2.8MPa) to about 3000 psi (20.7MPa) at space velocities (LHSV) between about 0.1 and 20 and a hydrogen recycle rate of about 400 to 1500 SCF/bb1 (72-270 litre H₂/litre of feed). The hydrogenation catalyst employed must be active enough not only to hydrogenate the olefins, diolefins and color bodies which may be present, but also to reduce the aromatic content. Suitable hydrogenation catalyst are disclosed in U. S. Patent No. 4,921,594, issued May 1, 1990 to Miller. The hydrofinishing step is beneficial in preparing an acceptably stable product (e.g., a lubricating oil) since dewaxed products prepared from hydrocracked stocks tend to be unstable to air and light and tend to form sludges spontaneously and quickly.

Lube oil may be prepared using SSZ-57. For example, a C₂₀+ lube oil may be made by isomerizing a C₂₀+ olefin feed over a catalyst comprising SSZ-57 in the hydrogen form and at least one Group VIII metal. Alternatively, the lubricating oil may be made by hydrocracking in a hydrocracking zone a hydrocarbonaceous feedstock to obtain an effluent comprising a hydrocracked oil, and catalytically dewaxing the effluent at a temperature of at least about 400°F (204°C) and at a gauge pressure of from about 15 psi (0.10 MPa) to about 3000 psi (20.7 MPa) in the presence of added hydrogen gas with a catalyst comprising SSZ-57 in the hydrogen form and at least one Group VIII metal.

### Aromatics Formation

SSZ-57 can be used to convert light straight run naphthas and similar mixtures to highly aromatic mixtures. Thus, normal and slightly branched chained hydrocarbons, preferably having a boiling range above about 40°C and less than about 200°C, can be converted to products having a substantial higher octane aromatics content by contacting the hydrocarbon feed with a catalyst comprising SSZ-57. It is also possible to convert heavier feeds into BTX or naphthalene derivatives of value using a catalyst comprising SSZ-57.

The conversion catalyst preferably contains a Group VIII metal compound to have sufficient activity for commercial use. By Group VIII metal compound as used herein is meant the metal itself or a compound thereof. The Group VIII noble metals and their compounds, platinum, palladium, and iridium, or combinations thereof can be used. Rhenium or tin or a mixture thereof may also be used in conjunction with the Group VIII metal compound and preferably a noble metal compound. The most preferred metal is platinum. The amount of Group VIII metal present in the conversion catalyst should be within the normal range of use in reforming catalysts, from about 0.05 to 2.0 weight percent, preferably 0.2 to 0.8 weight percent.

It is critical to the selective production of aromatics in useful quantities that the conversion catalyst be substantially free of acidity, for example, by neutralizing the zeolite with a basic metal, e.g., alkali metal, compound. Methods for rendering the catalyst free of acidity are known in the art. See the aforementioned U.S. Patent No. 4,910,006 and U.S. Patent No. 5,316,753 for a description of such methods.

The preferred alkali metals are sodium, potassium, rubidium and cesium. The zeolite itself can be substantially free of acidity only at very high silica: alumina mole ratios.

### Catalytic Cracking

Hydrocarbon cracking stocks can be catalytically cracked in the absence of hydrogen using SSZ-57, preferably predominantly in the hydrogen form.

When SSZ-57 is used as a catalytic cracking catalyst in the absence of hydrogen, the catalyst may be employed in conjunction with traditional cracking catalysts, e.g., any aluminosilicate heretofore employed as a component in cracking catalysts. Typically, these are large pore, crystalline aluminosilicates. Examples of these traditional cracking catalysts are disclosed in the aforementioned U.S. Patent No. 4,910,006 and U.S. Patent No 5,316,753. When a traditional cracking catalyst (TC) component is employed, the relative weight ratio of the TC to the SSZ-57 is generally between about 1:10 and about 500:1, desirably between about 1:10 and about 200:1, preferably between about 1:2 and about 50:1, and most preferably is between about 1:1 and about 20:1. The novel zeolite and/or the traditional cracking component may be further ion exchanged with rare earth ions to modify selectivity.

The cracking catalysts are typically employed with an inorganic oxide matrix component. See the aforementioned U.S. Patent No. 4,910,006 and U.S. Patent No. 5,316,753 for examples of such matrix components.

### Isomerization

The present catalyst is highly active and highly selective for isomerizing C₄ to C₇ hydrocarbons. The activity means that the catalyst can operate at relatively low temperature which thermodynamically favors highly branched paraffins. Consequently, the catalyst can produce a high octane product. The high selectivity means that a relatively high liquid yield can be achieved when the catalyst is run at a high octane.

The present process comprises contacting the isomerization catalyst, i.e., a catalyst comprising SSZ-57 in the hydrogen form, with a hydrocarbon feed under isomerization conditions. The feed is preferably a light straight run fraction, boiling within the range of 30°F (-1°C) to 250°F (121°C) and preferably from 60°F (16°C) to 200°F (93°C). Preferably, the hydrocarbon feed for the process comprises a substantial amount of C₄ to C₇ normal and slightly branched low octane hydrocarbons, more preferably C₅ and C₆ hydrocarbons.

It is preferable to carry out the isomerization reaction in the presence of hydrogen. Preferably, hydrogen is added to give a hydrogen to hydrocarbon ratio (H₂/HC) of between 0.5 and 10 H₂/HC, more preferably between 1 and 8 H₂/HC. See the aforementioned U.S. Patent No. 4,910,006 and U.S. Patent No. 5,316,753 for a further discussion of isomerization process conditions.

A low sulfur feed is especially preferred in the present process. The feed preferably contains less than 10 ppm, more preferably less than 1 ppm, and most preferably less than 0.1 ppm sulfur. In the case of a feed which is not already low in sulfur, acceptable levels can be reached by hydrogenating the feed in a presaturation zone with a hydrogenating catalyst which is resistant to sulfur poisoning. See the aforementioned U.S. Patent No. 4,910,006 and U.S. Patent No. 5,316,753 for a further discussion of this hydrodesulfurization process.

It is preferable to limit the nitrogen level and the water content of the feed. Catalysts and processes which are suitable for these purposes are known to those skilled in the art.

After a period of operation, the catalyst can become deactivated by sulfur or coke. See the aforementioned U.S. Patent No. 4,910,006 and U.S. Patent No. 5,316,753 for a further discussion of methods of removing this sulfur and coke, and of regenerating the catalyst.

The conversion catalyst preferably contains a Group VIII metal compound to have sufficient activity for commercial use. By Group VIII metal compound as used herein is meant the metal itself or a compound thereof. The Group VIII noble metals and their compounds, platinum, palladium, and iridium, or combinations thereof can be used. Rhenium and tin may also be used in conjunction with the noble metal. The most preferred metal is platinum. The amount of Group VIII metal present in the conversion catalyst should be within the normal range of use in isomerizing catalysts, from about 0.05 to 2.0 weight percent, preferably 0.2 to 0.8 weight percent.

### Alkylation and Transalkylation

SSZ-57 can be used in a process for the alkylation or transalkylation of an aromatic hydrocarbon. The process comprises contacting the aromatic hydrocarbon with a C₂ to C₁₆ olefin alkylating agent or a polyalkyl aromatic hydrocarbon transalkylating agent, under at least partial liquid phase conditions, and in the presence of a catalyst comprising SSZ-57.

SSZ-57 can also be used for removing benzene from gasoline by alkylating the benzene as described above and removing the alkylated product from the gasoline.

For high catalytic activity, the SSZ-57 zeolite should be predominantly in its hydrogen ion form. It is preferred that, after calcination, at least 80% of the cation sites are occupied by hydrogen ions and/or rare earth ions.

Examples of suitable aromatic hydrocarbon feedstocks which may be alkylated or transalkylated by the process of the invention include aromatic compounds such as benzene, toluene and xylene. The preferred aromatic hydrocarbon is benzene. There may be occasions where naphthalene or naphthalene derivatives such as dimethylnaphthalene may be desirable. Mixtures of aromatic hydrocarbons may also be employed.

Suitable olefins for the alkylation of the aromatic hydrocarbon are those containing 2 to 20 carbon atoms, preferably 2 to 4 carbon atoms, such as ethylene, propylene, butene-1, trans-butene-2 and cis-butene-2, or mixtures thereof. There may be instances where pentenes are desirable. The preferred olefins are ethylene and propylene. Longer chain alpha olefins may be used as well.

When transalkylation is desired, the transalkylating agent is a polyalkyl aromatic hydrocarbon containing two or more alkyl groups that each may have from 2 to about 4 carbon atoms. For example, suitable polyalkyl aromatic hydrocarbons include di-, tri- and tetra-alkyl aromatic hydrocarbons, such as diethylbenzene, triethylbenzene, diethylmethylbenzene (diethyltoluene), di-isopropylbenzene, di-isopropyltoluene, dibutylbenzene, and the like. Preferred polyalkyl aromatic hydrocarbons are the dialkyl benzenes. A particularly preferred polyalkyl aromatic hydrocarbon is di-isopropylbenzene.

When alkylation is the process conducted, reaction conditions are as follows. The aromatic hydrocarbon feed should be present in stoichiometric excess. It is preferred that molar ratio of aromatics to olefins be greater than four-to-one to prevent rapid catalyst fouling. The reaction temperature may range from 100°F (38°C) to 600°F (316°C), preferably 250°F (121°C) to 450°F (232°C). The reaction gauge pressure should be sufficient to maintain at least a partial liquid phase in order to retard catalyst fouling. This is typically 50 psi (0.34MPa) to 1000 psi (6.89MPa) depending on the feedstock and reaction temperature. Contact time may range from 10 seconds to 10 hours, but is usually from 5 minutes to an hour. The weight hourly space velocity (WHSV), in terms of grams (pounds) of aromatic hydrocarbon and olefin per gram (pound) of catalyst per hour, is generally within the range of about 0.5 to 50.

When transalkylation is the process conducted, the molar ratio of aromatic hydrocarbon will generally range from about 1:1 to 25:1, and preferably from about 2:1 to 20:1. The reaction temperature may range from about 100°F (38°C) to 600°F (316°C), but it is preferably about 250°F (121°C) to 450°F (232°C). The reaction gauge pressure should be sufficient to maintain at least a partial liquid phase, typically in the range of about 50 psi (0.34MPa) to 1000 psi (6.89MPa), preferably 300 psi (2.07MPa) to 600 psi (4.14MPa). The weight hourly space velocity will range from about 0.1 to 10. U.S. Patent No. 5,082,990 issued on January 21, 1992 to Hsieh et al. describes such processes.

### Conversion of Paraffins to Aromatics

SSZ-57 can be used to convert light gas C₂-C₆ paraffins to higher molecular weight hydrocarbons including aromatic compounds. Preferably, the zeolite will contain a catalyst metal or metal oxide wherein said metal is selected from the group consisting of Groups IB, IIB, VIII and IIIA of the Periodic Table. Preferably, the metal is gallium, niobium, indium or zinc in the range of from about 0.05 to 5% by weight.

### Xylene Isomerization

SSZ-57 may also be useful in a process for isomerizing one or more xylene isomers in a C₈ aromatic feed to obtain ortho-, meta-, and para-xylene in a ratio approaching the equilibrium value. In particular, xylene isomerization is used in conjunction with a separate process to manufacture para-xylene. For example, a portion of the para-xylene in a mixed C₈ aromatics stream may be recovered by crystallization and centrifugation. The mother liquor from the crystallizer is then reacted under xylene isomerization conditions to restore ortho-, meta- and para-xylenes to a near equilibrium ratio. At the same time, part of the ethylbenzene in the mother liquor is converted to xylenes or to products which are easily separated by filtration. The isomerate is blended with fresh feed and the combined stream is distilled to remove heavy and light by-products. The resultant C₈ aromatics stream is then sent to the crystallizer to repeat the cycle.

Optionally, isomerization in the vapor phase is conducted in the presence of 3.0 to 30.0 moles of hydrogen per mole of alkylbenzene (e.g., ethylbenzene). If hydrogen is used, the catalyst should comprise about 0.1 to 2.0 wt. % of a hydrogenation/dehydrogenation component selected from Group VIII (of the Periodic Table) metal component, especially platinum or nickel. By Group VIII metal component is meant the metals and their compounds such as oxides and sulfides.

Optionally, the isomerization feed may contain 10 to 90 wt. % of a diluent such as toluene, trimethylbenzene, naphthenes or paraffins.

### Oligomerization

It is expected that SSZ-57 can also be used to oligomerize straight and branched chain olefins having from about 2 to 21 carbon atoms and preferably 2-5 carbon atoms. The oligomers which are the products of the process are medium to heavy olefins which are useful for both fuels, i.e., gasoline or a gasoline blending stock and chemicals.

The oligomerization process comprises contacting the olefin feedstock in the gaseous or liquid phase with a catalyst comprising SSZ-57.

The zeolite can have the original cations associated therewith replaced by a wide variety of other cations according to techniques well known in the art. Typical cations would include hydrogen, ammonium and metal cations including mixtures of the same. Of the replacing metallic cations, particular preference is given to cations of metals such as rare earth metals, manganese, calcium, as well as metals of Group II of the Periodic Table, e.g., zinc, and Group VIII of the Periodic Table, e.g., nickel. One of the prime requisites is that the zeolite have a fairly low aromatization activity, i.e., in which the amount of aromatics produced is not more than about 20% by weight. This is accomplished by using a zeolite with controlled acid activity [alpha value] of from about 0.1 to about 120, preferably from about 0.1 to about 100, as measured by its ability to crack n-hexane.

Alpha values are defined by a standard test known in the art, e.g., as shown in U.S. Patent No. 3,960,978 issued on June 1, 1976 to Givens et al. If required, such zeolites may be obtained by steaming, by use in a conversion process or by any other method which may occur to one skilled in this art.

### Condensation of Alcohols

SSZ-57 can be used to condense lower aliphatic alcohols having 1 to 10 carbon atoms to a gasoline boiling point hydrocarbon product comprising mixed aliphatic and aromatic hydrocarbon. The process disclosed in U.S. Patent No. 3,894,107, issued July 8, 1975 to Butter et al., describes the process conditions used in this process.

The catalyst may be in the hydrogen form or may be base exchanged or impregnated to contain ammonium or a metal cation complement, preferably in the range of from about 0.05 to 5% by weight. The metal cations that may be present include any of the metals of the Groups I through VIII of the Periodic Table. However, in the case of Group IA metals, the cation content should in no case be so large as to effectively inactivate the catalyst, nor should the exchange be such as to eliminate all acidity. There may be other processes involving treatment of oxygenated substrates where a basic catalyst is desired.

### Methane Upgrading

Higher molecular weight hydrocarbons can be formed from lower molecular weight hydrocarbons by contacting the lower molecular weight hydrocarbon with a catalyst comprising SSZ-60 and a metal or metal compound capable of converting the lower molecular weight hydrocarbon to a higher molecular weight hydrocarbon. Examples of such reactions include the conversion of methane to C₂₊ hydrocarbons such as ethylene or benzene or both. Examples of useful metals and metal compounds include lanthanide and or actinide metals or metal compounds.

These reactions, the metals or metal compounds employed and the conditions under which they can be run are disclosed in U.S. Patents No. 4,734,537, issued March 29, 1988 to Devries et al.; 4,939,311, issued July 3,1990 to Washecheck et al.; 4,962,261, issued October 9, 1990 to Abrevaya et al.; 5,095,161, issued March 10, 1992 to Abrevaya et al.; 5,105,044, issued April 14, 1992 to Han et al.; 5,105,046, issued April 14, 1992 to Washecheck; 5,238,898, issued August 24, 1993 to Han et al.; 5,321,185, issued June 14, 1994 to van der Vaart; and 5,336,825, issued August 9, 1994 to Choudhary et al.

SSZ-57 may be used for the catalytic reduction of the oxides of nitrogen in a gas stream. Typically, the gas stream also contains oxygen, often a stoichiometric excess thereof. Also, the SSZ-57 may contain a metal or metal ions within or on it which are capable of catalyzing the reduction of the nitrogen oxides. Examples of such metals or metal ions include copper, cobalt and mixtures thereof.

One example of such a process for the catalytic reduction of oxides of nitrogen in the presence of a zeolite is disclosed in U.S. Patent No. 4,297,328, issued October 27, 1981 to Ritscher et al. There, the catalytic process is the combustion of carbon monoxide and hydrocarbons and the catalytic reduction of the oxides of nitrogen contained in a gas stream, such as the exhaust gas from an internal combustion engine. The zeolite used is metal ion-exchanged, doped or loaded sufficiently so as to provide an effective amount of catalytic copper metal or copper ions within or on the zeolite. In addition, the process is conducted in an excess of oxidant, e.g., oxygen.

### EXAMPLES

The following examples demonstrate but do not limit the present invention.

### Example 1

### Synthesis of Boron-SSZ-57

A 23 cc Teflon liner is charged with 4.8 gm of 0.625M aqueous solution of N-butyl-N-cyclohexylpyrrolidinium hydroxide (3 mmol template), 1.2 gm of 1M aqueous solution of NaOH (1.2 mmol NaOH) and 6 gm of de-ionized water. To this mixture, 0.06 gm of sodium borate decahydrate (0.157 mmol of Na₂B₄O₇. 10H₂O; about 0.315 mmol B₂O₃) are added and stirred until completely dissolved. Then, 0.9 gm of CABOSIL-M-5, fumed SiO₂, (about 14.7 mmol SiO₂) is added to the solution and the mixture was thoroughly stirred. The resulting gel is capped off and placed in a Parr bomb steel reactor and heated in an oven at 160°C while rotating at 43 rpm. The reaction is monitored by checking the gel's pH, and by looking for crystal formation using Scanning Electron Microscopy (SEM) at six day intervals. The reaction is completed after heating for 18 days at the conditions described above. Once the crystallization is complete, the starting reaction gel turns to a mixture comprising of a clear liquid layer with solids (powder) that settles to the bottom. The mixture is filtered through a fritted-glass funnel. The collected solids are thoroughly washed with water and then rinsed with acetone (10 ml) to remove any organic residues. The solids are allowed to air-dry over night and then dried in an oven at 120°C for 1 hour. The reaction affords 0.8 gram of a very fine powder. SEM shows the presence of only one crystalline phase. The X-ray analysis of the powder indicates that the material is SSZ-57.

Table 5 below shows the XRD data for the as-made material.

**Table 5**

| 2 Theta (deg.)^{(a)} | d-spacing (Å) | Intensity I/Io x 100 |
|---|---|---|
| 7.74 | 11.413 | 32 |
| 8.78 | 10.063 | 22 |
| 11.72 | 7.545 | 7 |
| 12.42 | 7.121 | 5 |
| 13.86 | 6.384 | 2 |
| 14.26 | 6.206 | 3 |
| 14.66 | 6.038 | 4 |
| 15.56 | 5.690 | 4 |
| 17.14 | 5.169 | 3 |
| 17.64 | 5.024 | 3 |
| 18.96 | 4.677 | 3 |
| 19.28 | 4.600 | 1 |
| 19.76 | 4.489 | 2 |
| 20.86 | 4.255 | 4 |
| 21.82 | 4.070 | 1 |
| 23.04 | 3.857 | 100 |
| 23.44 | SH 3.792 | 5 |
| 24.32 | 3.657 | 12 |
| 25.98 | 3.427 | 3 |
| 26.62 | 3.346 | 5 |
| 27.75 | 3.212 | 1 |
| 28.96 | 3.081 | 3 |
| 29.46 | 3.030 | 2 |
| 30.22 | 2.955 | 6 |
| 31.54 | 2.834 | 1 |
| 32.36 | 2.764 | 1 |
| 34.10 | 2.627 | 2 |
| 35.40 | 2.534 | 2 |
| 35.76 | 2.509 | 2 |
| 36.18 | 2.481 | 2 |
| 36.90 | 2.434 | 1 |
| 37.64 | 2.388 | 1 |
| 43.24 | 2.091 | 1 |
| 45.12 | 2.008 | 7 |
| 45.30 | SH 2.000 | 4 |
| 47.52 | 1.912 | 1 |
| 48.52 | 1.875 | 2 |

| | | |
|---|---|---|
| SH = Shoulder ^{(a)} ± 0.15 | | |

Table 6 below shows the results of making B-SSZ-57 at varying SiO2/B2O3 ratios. The synthesis was carried out as described in Example 1 keeping the amounts of all reagents constant but varying the amount of sodium borate decahydrate.

**Table 6**

| Synthesis of SSZ-57 at varying SiO₂/B₂O₃ ratios | | | |
|---|---|---|---|
| SiO₂/B₂O₃ | SiO₂/Na | Days | Observed Products |
| ∞ (all Silica) | 12.25 15 | | SSZ-57 |
| 280 | 11.74 | 15 | SSZ-57 |
| 140 | 11.26 | 15 | SSZ-57 |
| 93.6 | 10.83 | 18 | SSZ-57 |
| 70 | 10.42 | 18 | SSZ-57 |
| 56 | 10.05 | 18 | SSZ-57 |
| 46.3 | 9.7 | 18 | SSZ-57 |
| 40 | 9.38 | 18 | SSZ-57 |
| 35 | 9.07 | 18 | SSZ-57 |
| 31 | 8.8 | 18 | SSZ-57 |
| 28 | 8.52 | 18 | SSZ-57 |
| 25.5 | 8.27 | 18 | SSZ-57 |
| 23.3 | 8.03 | 18 | SSZ-57 |
| 21.55 | 7.81 | 21 | SSZ-57 & trace of Layered |
| 18.67 | 7.4 | 21 | SSZ-57 & trace of layered Material |

The synthesis is carried out exactly as described in Example 1 keeping the amount of NaOH, water and CABOSIL-M-5 the same while varying the amount of Na₂B₄O₇.10H₂O. SiO₂/OH=3.5, H₂O/SiO₂=45. The reactions are carried out at 160°C and 43 rpm

### Example 2

### Seeded Synthesis of Boron-SSZ-57

A 23 cc Teflon liner is charged with 4.8 gm of 0.625M aqueous solution of N-butyl-N-cyclohexylpyrrolidinium hydroxide (3 mmol template), 1.2 gm of 1M aqueous solution of NaOH (1.2 mmol NaOH) and 6 gm of de-ionized water. To this mixture, 0.06 gm of sodium borate decahydrate (0.157 mmol of Na₂B₄O₇.10H₂O; ∼0.315 mmol B₂O₃) is added and stirred until completely dissolved. Then, 0.9 gm of CABOSIL-M-5 (∼14.7 mmol SiO₂) and 0.04 gm of SSZ-57 (the product of Example 1) are added to the solution and the mixture is thoroughly stirred. The resulting gel is capped off and placed in a Parr bomb steel reactor and heated in an oven at 160°C while rotating at 43 rpm. The reaction is monitored by checking the gel's pH, and by looking for crystal formation using Scanning Electron Microscopy (SEM) at two day intervals. The reaction is completed after heating for 6 days at the conditions described above. Once the crystallization is complete, the starting reaction gel turns to a mixture comprising a clear liquid layer with solids (powder) that settle to the bottom. The mixture is filtered through a fritted-glass funnel. The collected solids are thoroughly washed with water and then rinsed with acetone (10 ml) to remove any organic residues. The solids are allowed to air-dry over night and then dried in an oven at 120°C for one hour. The reaction affords 0.86 gram of a very fine powder. SEM shows the presence of only one crystalline phase. Powder X-ray diffraction pattern of the product indicates the material is identical to the product of Example 1.

### Example 3

### Synthesis of Aluminum-SSZ-57 (using LZ-Y52 as aluminum source)

A 23 cc Teflon liner is charged with 3.6 gm of 0.625M aqueous solution of N-butyl-N-cyclohexylpyrrolidinium hydroxide (2.25 mmol template), 1.5 gm of 1M NaOH aqueous solution (1.5 mmol NaOH) and 2.3 gm of de-ionized water. To this solution, 0.26 gm of sodium-Y zeolite (Union Carbide LZ-Y52: SiO₂/Al₂O₃=5) and 0.80 gm of CABOSIL-M-5, fumed SiO₂, (about 13 mmol SiO₂) are added, consecutively. The mixture is thoroughly stirred and the resulting gel is capped off and placed in a Parr bomb Steel reactor and heated in an oven at 160°C while rotating at 43 rpm. The reaction is monitored by checking the gel's pH, and by looking for crystal formation using Scanning Electron Microscopy (SEM) at six day intervals. The reaction is completed after heating at the conditions described above for 6 days. The completed reaction mixture appears as a colorless liquid with fine white solid settled at the bottom of the Teflon liner. The mixture is filtered through a fritted-glass funnel, and the obtained white solids are washed generously with water and then rinsed with a small a mount of acetone and allowed to air-dry overnight. The obtained solids are further dried in an oven at 120°C for one hour. The reaction yields 0.82 gm of SSZ-57 as indicated by the powder X-ray analysis of the product and a trace of the starting reagent LZ-Y52 zeolite.

Table 7 below shows the results of attempts at making Al-SSZ-57 at varying SiO2/B2O3 ratios. The synthesis was carried out exactly as described in example 3 but varying the amount of LZ-Y52 while keeping all the amounts of all other reagents constant.

**Table 7**

| Synthesis of SSZ-57 at varying SiO₂/Al₂O₃ ratios | | | |
|---|---|---|---|
| SiO₂/Al₂O₃ | SiO₂/Na | Days | Observed Products |
| ∞ (all Silica) | 8.7 | 18 | SSZ-57, trace of Layered |
| 317 | 8.4 | 12 | SSZ-57 |
| 158.5 | 8.1 | 12 | SSZ-57 |
| 107.5 | 7.78 | 12 | SSZ-57 |
| 82.5 | 7.5 | 12 | SSZ-57 |
| 66.9 | 7.3 | 12 | SSZ-57 |
| 56.5 | 7.1 | 12 | SSZ-57 |
| 49 | 6.9 | 12 | SSZ-57, trace LZ-Y52 |
| 43.5 | 6.7 | 12 | SSZ-57, trace LZ-Y52 |
| 39 | 6.6 | 12 | SSZ-57, trace LZ-Y52 |
| 35.8 | 6.4 | 12 | SSZ-57 (major), LZ-Y52 (minor) |
| 33 | 6.26 | 12 | SSZ-57 (major), LZ-Y52 (minor) |
| 30.8 | 6.16 | 12 | SSZ-57 (major), LZ-Y52 (minor) |
| 26.3 | 5.85 | 18 | SSZ-57 (major), LZ-Y52 (minor) |
| 23.8 | 5.66 | 18 | SSZ-57 (major), LZ-Y52 (minor) |
| 20 | 5.32 | 18 | SSZ-57 (major), LZ-Y52 (minor) |

The reactions are carried out exactly as in Example 3 above (160°C and 43 rpm) using Union Carbide's LZ-Y52 as the aluminum source and CABOSIL-M-5 as the SiO₂ source. SiO₂/OH=8.7, H₂O/SiO₂=28.

SSZ-57 is prepared in a similar manner using N-propyl-N-cycloheptylpyrrolidinium cation or N-butyl-N-cyclooctylpyrrolidinium as the templating agent.

### Example 4

### Synthesis of Al-SSZ-57 (using Reheis F-2000 as aluminum source)

A 23 cc Teflon liner is charged with 3.6 gm of 0.625M aqueous solution of N-butyl-N-cyclohexylpyrrolidinium hydroxide (2.25 mmol template), 1.5 gm of 1M NaOH aqueous solution (1.5 mmol NaOH) and 6.8 gm of de-ionized water. To this solution, 0.032 gm of Reheis F-2000 (0.164 mmol of Al₂O₃; 0.195 gm of Reheis F-2000= 1 mmol Al₂O₃) are added and stirred until completely dissolved. Then, 0.90 gm of CABOSIL-M-5, fumed SiO₂, (about 14.7 mmol SiO₂) is added to the mixture and the resulting gel is capped off and placed in a Parr bomb Steel reactor and heated in an oven at 170°C while rotating at 43 rpm. The reaction is monitored by checking the gel's pH, and by looking for crystallization using Scanning Electron Microscopy (SEM) at six day intervals. The reaction is completed after heating at the conditions described above for 18 days. The completed reaction mixture appears as a colorless liquid with fme white solid settled at the bottom of the Teflon liner. The mixture is filtered through a fritted-glass funnel, and the obtained white solids are washed generously with water and then rinsed with a small a mount of acetone and allowed to air-dry overnight. Then, the solids are further dried in an oven at 120°C for one hour. The reaction yields 0.85 gm of SSZ-57 as indicated by the powder X-ray analysis of the product.

### Example 5

### Seeded Synthesis of Al-SSZ-57 (using Reheis F-2000 as aluminum source)

A 23 cc Teflon liner is charged with 3.6 gm of 0.625M aqueous solution ofN-butyl-N-cyclohexylpyrrolidinium hydroxide (2.25 mmol template), 1.5 gm of 1M NaOH aqueous solution (1.5 mmol NaOH) and 6.8 gm of de-ionized water. To this solution, 0.032 gm of Reheis F-2000 (0.164 mmol of Al₂O₃; 0.195 gm of Reheis F-2000=1 mmol Al₂O₃) is added and stirred until completely dissolved. Then, 0.90 gm of CABOSIL-M-5 (∼14.7 mmol SiO₂) and 0.04 gm of SSZ-57 (the product of Example 4) are added to the mixture. The resulting gel is thoroughly stirred, capped off and placed in a Parr Steel reactor and heated in an oven at 170°C while rotating at 43 rpm. The reaction is monitored by checking the gel's pH, and by looking for crystallization using Scanning Electron Microscopy (SEM). The reaction is completed after heating at the conditions described above for 5 days. The completed reaction mixture appears as a colorless liquid with fine white solid settled at the bottom of the Teflon liner. The mixture is filtered through a fritted-glass funnel, and the obtained white solids are washed generously with water and then rinsed with a small amount of acetone and allowed to air-dry overnight. Then. the solids are further dried in an oven at 120°C for 1 hour. The reaction yields 0.9 gm of SSZ-57 as indicated by the powder X-ray analysis of the product.

### Example 6

### Synthesis of All Silica-SSZ-57

A 23 cc Teflon liner is charged with 4.8 gm of 0.625M aqueous solution of N-butyl-N-cyclohexylpyrrolidinium hydroxide (3 mmol template), 1.2 gm of 1M aqueous solution of NaOH (1.2 mmol NaOH) and 6 gm of de-ionized water. Then, 0.9 gm of CABOSIL-M-5, fumed SiO₂, (about 14.7 mmol SiO₂) is added to the solution and the mixture is thoroughly stirred. The resulting gel is capped off and placed in a Parr bomb steel reactor and heated in an oven at 160°C while rotating at 43 rpm. The reaction is monitored by checking the gel's pH, and by looking for crystal formation using Scanning Electron Microscopy (SEM) at six day intervals. The reaction is completed after heating for 18 days at the conditions described above. Once the crystallization is complete, the starting reaction gel turns to a mixture comprising of a clear liquid layer with solids (powder) that settled to the bottom. The mixture is filtered through a fritted-glass funnel. The collected solids are thoroughly washed with water and then rinsed with acetone (10 ml) to remove any organic residues. The solids are allowed to air-dry over night and then dried in an oven at 120°C for one hour. The reaction affords 0.86 gram of a very fine powder. SEM shows the presence of only one crystalline phase. The X-ray analysis of the powder indicates that the material is identical to the products of Examples 1, 2, 3, 4 and 5 above (SSZ-57).

### Example 7

### Synthesis of Templating Agent N-butyl-N-cyclohexylpyrrolidinium Cation

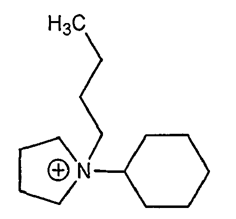

### I. Synthesis of N-cyclohexylpyrrolidine

The structure-directing agent (SDA) is synthesized using the reaction sequence described in the scheme below. A three neck 3000-ml flask is charged with 100 gm (1.4 mole) of pyrrolidine, 50 gm of cyclohexanone (0.51 mole) and 1000 ml anhydrous hexane. To the resulting solution, 122 gm (1.022 mole) of anhydrous magnesium sulfate is added and the mixture is mechanically stirred and heated at reflux (the reaction is monitored by NMR analysis) for 96 hrs. The reaction mixture is filtered through a fritted glass funnel. The filtrate is concentrated under reduced pressure on a rotary evaporator to give 75 gm of a clear (yellow-tinted) oily substance. ¹H-NMR and ¹³C-NMR spectra are acceptable for the desired product 1-(1-pyrrolidino)cyclohexene. Saturation of 1-(1-pyrrolidino)cyclohexene, to give N-cyclohexylpyrrolidine, is accomplished in quantitative yield by hydrogenation in ethanol at a 55 psi pressure of hydrogen gas in the presence of 10% Pd on activated carbon.

N-cyclohexylpyrrolidine is also obtained by lithium aluminum hydride reduction of 1-cyclohexyl-2-pyrrolidinone. To a suspension of 22.7 gm (0.6 mole) of lithium aluminum hydride in 600 ml anhydrous tetrahydrofuran (THF) in a three-neck 3000-ml reaction flask at 0°C (ice bath), 50 gm (0.3 mole) of 1-cyclohexyl-2-pyrrolidinone in 100 ml THF are added drop wise via an addition funnel. Once the addition is complete, the ice-bath is replaced with a heating mantle and the reaction is refluxed and mechanically stirred overnight. The reaction is kept protected from moisture. The reaction mixture is then cooled down to 0°C (the heating mantle is replaced with an ice-bath) and the reaction mixture is diluted with 500 ml ether. The reaction is worked up by adding 75 ml of 15 wt.% NaOH aqueous solution drop wise at 0°C with vigorous stirring. Once the addition of NaOH is finished, 15 ml of H₂O is added and the reaction mixture is left to stir for an additional 15 min. The grayish looking mixture turns into a two-phase mixture with a clear colorless liquid and a white precipitate. The mixture is filtered and the solids are thoroughly rinsed with ether. The filtrate and the ether rinses are combined and dried over anhydrous magnesium sulfate. Filtration and concentration of the filtrate under reduced pressure on a rotary evaporator give the desired reduction product as colorless oil in 95.7% yield (44 gm).

### II. Quaternization (Synthesis of N-butyl-N-cyclohexylpyrrolidinium Iodide)

To a solution of 50 gm (0.326 mole) of N-cyclohexylpyrrolidine in 600 ml anhydrous methanol, 120 gm (0.652 mole) of butyl iodide is added. The reaction is mechanically stirred for 48 hours at room temperature. Then, an additional equivalent of butyl iodide and one equivalent (33.7 gm; 0.326 mole) of potassium bicarbonate are added and the reaction is stirred at refluxing temperature for 72 hours. The reaction mixture is concentrated under reduced pressure on a rotary evaporator to give an off-white-colored solid material. The solids are rinsed several times with chloroform and filtered after each rinse. All the chloroform rinses are combined and concentrated to give a white powder whose NMR data is acceptable for the desired quaternary ammonium iodide salt. The reaction affords 95 gm (86% yield) of the product. The iodide salt is purified by recrystallization. This is done by completely dissolving the iodide salt in acetone and then precipitating by the addition of ethyl ether to the acetone solution. The procedure gives 87 gm of white powder with very clean ¹H and ¹³C-NMR spectra for the product (N-butyl-N-cyclohexylpyrrolidinium iodide).

### III. Ion Exchange (Synthesis of N-Butyl-N-Cyclohexylpyrrolidinium Hydroxide)

N-butyl-N-cyclohexylpyrrolidinium iodide salt (85 gm; 0.25 mol) is dissolved in 300 ml water in a 500-ml volume plastic bottle. To the solution, 300 gm of Ion-Exchange Resin-OH (BIO RAD® AH1-X8) is added and the mixture is stirred at room temperature overnight. The mixture is filtered and the solids are rinsed with additional 85 ml of water. The original filtrate and the rinse are combined and a small amount is titrated with 0.1N HCl to indicate the presence of 0.24 mol hydroxide (0.24 mol N-butyl-N-cyclohexylpyrrolidinium hydroxide) in the solution. The synthetic procedure described above is depicted below.

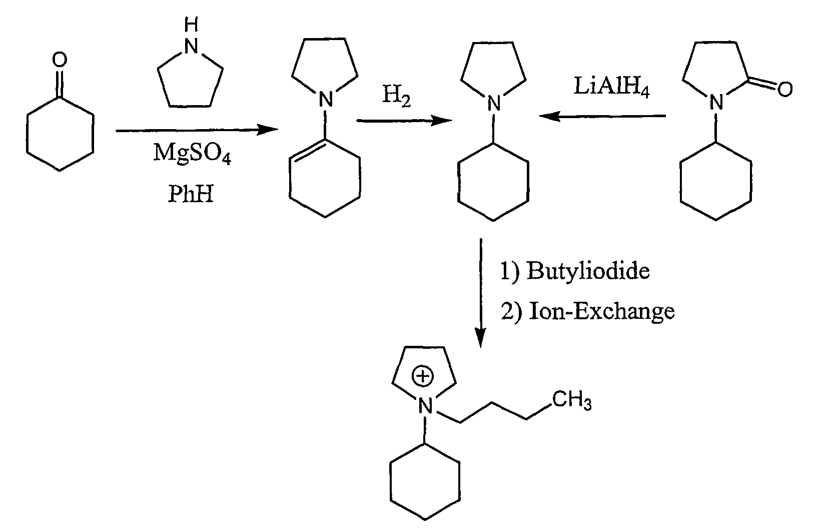

In a similar manner, N-propyl-N-cycloheptylpyrrolidinium cation and N-butyl-N-cyclooctylpyrrolidinium are prepared.

### Example 8

### Calcination of SSZ-57

The material from Examples 1 is calcined in the following manner. A thin bed of material is heated in a muffle furnace from room temperature to 120°C at a rate of 1°C per minute and held at 120°C for three hours. The temperature is then ramped up to 540°C at the same rate and held at this temperature for 5 hours, after which it is increased to 594°C and held there for another 5 hours. A nitrogen stream with a slight bleed of air is passed over the zeolite at a rate of 20 standard cubic feet per minute during heating. The X-ray diffraction data for the product is provided in Table 8 below. Table 8 shows the XRD data for the calcined material.

**Table 8**

| Calcined SSZ-57 | | |
|---|---|---|
| 2 Theta (deg.)^{(a)} | d-spacing (Å) | Intensity I/Io x 100 |
| 7.72 | 11.443 | 100 |
| 8.78 | 10.063 | 74 |
| 11.74 | 7.532 | 2 |
| 12.43 | 7.115 | 2 |
| 13.84 | 6.393 | 3 |
| 14.24 | 6.215 | 1 |
| 14.70 | 6.021 | 17 |
| 15.56 | 5.690 | 8 |
| 17.16 | 5.163 | 1 |
| 17.66 | 5.018 | 11 |
| 19.00 | 4.667 | 2 |
| 19.32 | 4.591 | 1 |
| 19.74 | 4.494 | 2 |
| 20.82 | 4.263 | 3 |
| 23.08 | 3.850 | 91 |
| 23.48 | SH 3.786 | 5 |
| 24.36 | 3.651 | 11 |
| 25.05 | 3.552 | 1 |
| 26.04 | 3.419 | 4 |
| 26.66 | 3.341 | 6 |
| 29.00 | 3.076 | 3 |
| 29.52 | 3.023 | 2 |
| 30.26 | 2.951 | 7 |
| 31.56 | 2.833 | 1 |
| 31.90 | 2.803 | 1 |
| 34.20 | 2.620 | 2 |
| 35.46 | 2.529 | 1 |
| 35.84 | 2.503 | 2 |
| 36.28 | 2.474 | 1 |
| 36.96 | 2.430 | 1 |
| 37.76 | 2.380 | 1 |
| 43.97 | 2.058 | 1 |
| 45.26 | 2.002 | 16 |
| 46.22 | 1.962 | 1 |
| 47.58 | 1.910 | 1 |
| 48.60 | 1.872 | 1 |

| | | |
|---|---|---|
| SH = Shoulder (a) ± 0.15 | | |

### Example 9

### NH₄ Exchange

Ion exchange of calcined SSZ-57 material (prepared in Example 8) was performed using NH₄NO₃ to convert the zeolite from its Na⁺ form to the NH₄⁺ form, and, ultimately, the H⁺ form. Typically, the same mass of NH₄NO₃ as zeolite is slurried in water at a ratio of 25-50:1 water to zeolite. The exchange solution is heated at 95°C for 2 hours and then filtered. This procedure can be repeated up to three times. Following the final exchange, the zeolite is washed several times with water and dried. This NH₄⁺ form of SSZ-57 can then be converted to the H⁺ form by calcination (as described in Example 9) to 540°C.

### Example 10

### N₂ Micropore Volume

The H⁺ form of the product of Example 1 after treated as in example 8 and 9 was subjected to a surface area and micropore volume analysis using N₂ as adsorbate and via the BET method. The surface area of the zeolitic material is 52 M²/g and the micropore volume is 0.17 cc/g with at total pore volume of 0.2 cc/gm and a BET area of 415 m²/gm.

### Example 11

### Constraint Index Determination

The hydrogen form of the zeolite of Example 5 (after treatment according to Examples 8 and 9) is pelletized at 2-3 KPSI, crushed and meshed to 20-40, and then > 0.50 gram is calcined at about 540°C in air for four hours and cooled in a desiccator. 0.50 Gram is packed into a 3/8 inch stainless steel tube with alundum on both sides of the zeolite bed. A Lindburg furnace is used to heat the reactor tube. Helium is introduced into the reactor tube at 10 cc/min. and at atmospheric pressure. The reactor is heated to about 315°C, and a 50/50 (w/w) feed of n-hexane and 3-methylpentane is introduced into the reactor at a rate of 8 µl/min. Feed delivery is made via a Brownlee pump. Direct sampling into a gas chromatograph begins after 10 minutes of feed introduction. The Constraint Index value is calculated from the gas chromatographic data using methods known in the art, and is found to be 1.05 at 315°C and 10 minutes on-stream. Feed conversion is greater than 82%. The data suggest an intermediate pore zeolite with high catalytic activity.

### Example 12

### Hydrocracking of n-Hexadecane

A sample of SSZ-57 as prepared in Example 5 was treated as in Examples 8 and 9. Then a sample was slurried in water and the pH of the slurry was adjusted to a pH of ∼10 with dilute ammonium hydroxide. To the slurry was added a solution of Pd(NH₃)₄(NO₃)₂ at a concentration which would provide 0.5 wt. % Pd with respect to the dry weight of the zeolite sample. This slurry was stirred for 48 hours at 100°C. After cooling, the slurry was filtered through a glass frit, washed with de-ionized water, and dried at 100°C. The catalyst was then calcined slowly up to 900°F (482°C) in air and held there for three hours.

The calcined catalyst was pelletized in a Carver Press and crushed to yield particles with a 20/40 mesh size range. Sized catalyst (0.5 g) was packed into a ¼" OD tubing reactor in a micro unit for n-hexadecane hydroconversion. Table 9 gives the run conditions and the products data for the hydrocracking test on n-hexadecane. After the catalyst was tested with n-hexadecane, it was titrated using a solution of butyl amine in hexane. The temperature was increased and the conversion and product data evaluated again under titrated conditions. The results shown in Table 9 show that SSZ-57 is effective as a hydrocracking catalyst.

**Table 9**

| n-Hexadecane Hydrocracking Test Data | | |
|---|---|---|
| Temperature | 488°F (253°C) | 540°F (282°C) |
| Time-on Stream | 26.6-30 | 72.1-72.6 |
| WHSV | 1.55 | 1.55 |
| PSIG | 1200 (8.27MPa) | 1200 (8.27MPa) |
| Titrated | No | Yes |
| n-16, % Conversion | 82.1 | 86.2 |
| Hydrocracking Conversion % | 57.6 | 49.5 |
| Isomerization Selectivity % | 28.3 | 41.8 |
| Cracking Selectivity % | 71.7 | 58.2 |
| C₄₋, % | 8.3 | 6 |
| C₅/C₄, % | 12.8 | 8.8 |
| C₅+C₆/C₅, % | 31.6 | 21.6 |
| DMB/MP | 0 | 0 |
| DMB/nC₆ | 0 | 0 |
| C₄-C₁₃, i/n | 0.8 | 1.13 |

## Claims

1. A zeolite having a mole ratio greater than 20 of (1) an oxide selected from silicon oxide, germanium oxide and mixtures thereof to (2) an oxide selected from boron oxide, aluminum oxide, gallium oxide, indium oxide, titanium oxide or a mixture thereof and having, after calcination, the X-ray diffraction lines of Table 3:
**Table 3**
| Two Theta (deg.)^{(a)} | d-spacing (Å) | Intensity I/Io |
|---|---|---|
| 7.7 | 11.5 | VS |
| 8.8 | 10.0 | VS |
| 14.7 | 6.02 | M |
| 15.55 | 5.69 | W |
| 17.65 | 5.02 | W |
| 20.8 | 4.27 | W |
| 23.10 | 3.85 | VS |
| 24.4 | 3.65 | M |
| 26.65 | 3.34 | W |
| 30.25 | 2.95 | W |
| 45.25 | 2.00 | W |
| | | |
|---|---|---|
| ^{(a)} ± 0.15 | | |

2. A zeolite according to Claim 1 wherein the oxides comprise silicon oxide and aluminum oxide.

3. A zeolite according to Claim 1 wherein the oxide (1) comprises silicon oxide.

4. A zeolite according to Claim 1 wherein the oxides comprise (1) an oxide selected from silicon oxide, germanium oxide and mixtures thereof and (2) boron oxide or a combination of boron oxide and aluminum oxide, gallium oxide, indium oxide, titanium oxide or a mixture thereof.

5. A zeolite according to Claim 1 wherein the oxides comprise silicon oxide and boron oxide.

6. A zeolite according to Claim 1 wherein said zeolite is predominantly in the hydrogen form.

7. A zeolite according to Claim 1 wherein said zeolite is free of acidity.

8. A zeolite in accordance with claim 1 having a composition, as synthesized and in the anhydrous state, in terms of mole ratios as follows:
YO₂/W_{c}O_{d} 20-∝
M_{2/n}/YO₂ 0.01-0.03
Q/YO₂ 0.02-0.05
wherein Y is silicon, germanium or a mixture thereof; W is boron, aluminum, gallium, indium, titanium or a mixture thereof; c is 1 or 2; d is 2 when c is 1 or d is 3 or 5 when c is 2; M is an alkali metal cation, alkaline earth metal cation or mixtures thereof; n is the valence of M; and Q comprises a N-butyl-N-cyclohexylpyrrolidinium cation, N-propyl-N-cycloheptylpyrrolidinium cation or N-butyl-N-cyclooctylpyrrolidinium cation.

9. A zeolite according to Claim 8 wherein the oxides comprise silicon oxide and aluminum oxide.

10. A zeolite according to Claim 8 wherein YO₂/W_{c}O_{d} is ∞.

11. A zeolite according to Claim 8 wherein Y is silicon, germanium or a mixture thereof and W is boron or a combination of boron and aluminum, gallium, indium, titanium or a mixture thereof.

12. A zeolite according to Claim 11 wherein W is boron and Y is silicon.

13. A method of preparing a zeolite in accordance with claim 1, having a mole ratio greater than 20 of (1) an oxide selected from silicon oxide, germanium oxide and mixtures thereof to (2) an oxide selected from boron oxide, aluminum oxide, gallium oxide, indium oxide, titanium oxide or a mixture thereof, said method comprising contacting under crystallization conditions sources of said oxides and a templating agent comprising a N-butyl-N-cyclohexylpyrrolidinium cation, N-propyl-N-cycloheptylpyrrolidinium cation or N-butyl-N-cyclooctylpyrrolidinium cation.

14. A method according to Claim 13 wherein the oxides comprise (1) an oxide selected from silicon oxide, germanium oxide and mixtures thereof and (2) boron oxide or a combination of boron oxide and aluminum oxide, gallium oxide, indium oxide, titanium oxide or a mixture thereof.

15. The method of Claim 13 wherein the crystalline material has, after calcination, the X-ray diffraction lines of Table 3 above.

16. The method of Claim 13 wherein the templating agent is a N-butyl-N-cyclohexylpyrrolidinium cation

17. The method of Claim 13 wherein the templating agent is a N-propyl-N-cycloheptylpyrrolidinium cation.

18. The method of Claim 13 wherein the templating agent is a N-butyl-N-cyclooctylpyrrolidinium cation.

19. A process for converting hydrocarbons comprising contacting a hydrocarbonaceous feed at hydrocarbon converting conditions with a catalyst comprising a zeolite according to claim 1.

20. The process of Claim 19 wherein the zeolite is free of acidity.

21. The process of Claim 19 wherein the process is a hydrocracking process comprising contacting the catalyst with a hydrocarbon feedstock under hydrocracking conditions.

22. The process of Claim 19 wherein the process is a dewaxing process comprising contacting the catalyst with a hydrocarbon feedstock under dewaxing conditions.

23. The process of Claim 19 wherein the process is a process for improving the viscosity index of a dewaxed product of waxy hydrocarbon feeds comprising contacting the catalyst with a waxy hydrocarbon feed under isomerization dewaxing conditions.

24. The process of Claim 19 wherein the process is a process for producing a C₂₀+ lube oil from a C₂₀+ olefin feed comprising isomerizing said olefin feed under isomerization conditions over the catalyst.

25. The process of Claim 24 wherein the catalyst further comprises at least one Group VIII metal.

26. The process of Claim 19 wherein the process is a process for catalytically dewaxing a hydrocarbon oil feedstock boiling above 350°F (177°C) and containing straight chain and slightly branched chain hydrocarbons comprising contacting said hydrocarbon oil feedstock in the presence of added hydrogen gas at a hydrogen pressure of 15-3000 psi (0.10-20.7MPa) under dewaxing conditions with the catalyst.

27. The process of Claim 26 wherein the catalyst further comprises at least one Group VIII metal.

28. The process of Claim 26 wherein said catalyst comprises a layered catalyst comprising a first layer comprising the zeolite and at least one Group VIII metal, and a second layer comprising an aluminosilicate zeolite which is more shape selective than the zeolite of said first layer.

29. The process of Claim 19 wherein the process is a process for preparing a lubricating oil which comprises:
hydrocracking in a hydrocracking zone a hydrocarbonaceous feedstock to obtain an effluent comprising a hydrocracked oil; and
catalytically dewaxing said effluent comprising hydrocracked oil at a temperature of at least 400°F (204°C) and at a gauge pressure of from 15 psi (0.10MPa) to 3000 psi (20.7 MPa) in the presence of added hydrogen gas with the catalyst.

30. The process of Claim 29 wherein the catalyst further comprises at least one Group VIII metal.

31. The process of Claim 19 wherein the process is a process for isomerization dewaxing a raffinate comprising contacting said raffinate in the presence of added hydrogen under isomerization dewaxing conditions with the catalyst.

32. The process of Claim 31 wherein the catalyst further comprises at least one Group VIII metal.

33. The process of Claim 31 wherein the raffinate is bright stock.

34. The process of Claim 19 wherein the process is a process for increasing the octane of a hydrocarbon feedstock to produce a product having an increased aromatics content comprising contacting a hydrocarbonaceous feedstock which comprises normal and slightly branched hydrocarbons having a boiling range above 40°C and less than 200°C under aromatic conversion conditions with the catalyst.

35. The process of Claim 34 wherein the zeolite is free of acid.

36. The process of Claim 34 wherein the zeolite contains a Group VIII metal component.

37. The process of Claim 19 wherein the process is a catalytic cracking process comprising contacting a hydrocarbon feedstock in a reaction zone under catalytic cracking conditions in the absence of added hydrogen with the catalyst.

38. The process of Claim 37 wherein the catalyst additionally comprises a large pore crystalline cracking component.

39. The process of Claim 19 wherein the process is an isomerization process for isomerizing C₄ to C₇ hydrocarbons, comprising contacting a feed having normal and slightly branched C₄ to C₇ hydrocarbons under isomerizing conditions with the catalyst.

40. The process of Claim 39 wherein the zeolite has been impregnated with at least one Group VIII metal.

41. The process of Claim 39 wherein the catalyst has been calcined in a steam/air mixture at an elevated temperature after impregnation of the Group VIII metal.

42. The process of Claim 40 wherein the Group VIII metal is platinum.

43. The process of Claim 19 wherein the process is a process for alkylating an aromatic hydrocarbon which comprises contacting under alkylation conditions at least a molar excess of an aromatic hydrocarbon with a C₂ to C₂₀ olefin under at least partial liquid phase conditions and in the presence of the catalyst.

44. The process of Claim 43 wherein the olefin is a C₂ to C₄ olefin.

45. The process of Claim 44 wherein the aromatic hydrocarbon and olefin are present in a molar ratio of 4:1 to 20:1, respectively.

46. The process of Claim 44 wherein the aromatic hydrocarbon is selected from the group consisting of benzene, toluene, ethylbenzene, xylene, naphthalene, naphthalene derivatives, dimethylnaphthalene or mixtures thereof.

47. The process of Claim 19 wherein the process is a process for transalkylating an aromatic hydrocarbon which comprises contacting under transalkylating conditions an aromatic hydrocarbon with a polyalkyl aromatic hydrocarbon under at least partial liquid phase conditions and in the presence of the catalyst.

48. The process of Claim 47 wherein the aromatic hydrocarbon and the polyalkyl aromatic hydrocarbon are present in a molar ratio of from 1:1 to 25:1, respectively.

49. The process of Claim 47 wherein the aromatic hydrocarbon is selected from the group consisting of benzene, toluene, ethylbenzene, xylene, or mixtures thereof.

50. The process of Claim 47 wherein the polyalkyl aromatic hydrocarbon is a dialkylbenzene.

51. The process of Claim 19 wherein the process is a process to convert paraffins to aromatics which comprises contacting paraffins under conditions which cause paraffins to convert to aromatics with a catalyst comprising the zeolite and gallium, zinc, or a compound of gallium or zinc.

52. The process of Claim 19 wherein the process is a process for isomerizing olefins comprising contacting said olefin under conditions which cause isomerization of the olefin with the catalyst.

53. The process of Claim 19 wherein the process is a process for isomerizing an isomerization feed comprising an aromatic C₈ stream of xylene isomers or mixtures of xylene isomers and ethylbenzene, wherein a more nearly equilibrium ratio of ortho-, meta- and para-xylenes is obtained, said process comprising contacting said feed under isomerization conditions with the catalyst.

54. The process of Claim 19 wherein the process is a process for oligomerizing olefins comprising contacting an olefin feed under oligomerization conditions with the catalyst.

55. A process for converting lower alcohols and other oxygenated hydrocarbons comprising contacting said lower alcohol or other oxygenated hydrocarbon under conditions to produce liquid products with a catalyst comprising a zeolite according to claim 1.

56. The process of Claim 19 wherein the process is a process for the production of higher molecular weight hydrocarbons from lower molecular weight hydrocarbons comprising the steps of:
(a) introducing into a reaction zone a lower molecular weight hydrocarbon-containing gas and contacting said gas in said zone under C₂₊ hydrocarbon synthesis conditions with the catalyst and a metal or metal compound capable of converting the lower molecular weight hydrocarbon to a higher molecular weight hydrocarbon; and
(b) withdrawing from said reaction zone a higher molecular weight hydrocarbon-containing stream.

57. The process of Claim 56 wherein the metal or metal compound comprises a lanthanide or actinide metal or metal compound.

58. The process of Claim 56 wherein the lower molecular weight hydrocarbon is methane.

59. A process according to Claim 19, 21, 22, 23, 24, 26, 29, 31, 37, 39, 43 or 47
wherein the zeolite is predominantly in the hydrogen form.

60. A process for the reduction of oxides of nitrogen contained in a gas stream in the presence of oxygen wherein said process comprises contacting the gas stream with a zeolite according to claim 1.

61. The process of Claim 60 wherein said zeolite contains a metal or metal ions capable of catalyzing the reduction of the oxides of nitrogen.

62. The process of Claim 61 wherein the metal is copper, cobalt or mixtures thereof.

63. The process of Claim 61 wherein the gas stream is the exhaust stream of an internal combustion engine.

## Patentansprüche

1. Zeolith, dessen Molverhältnis von (1) einem Oxid, ausgewählt aus Siliciumoxid, Germaniumoxid und Gemischen davon, zu (2) einem Oxid, ausgewählt aus Boroxid, Aluminiumoxid, Galliumoxid, Indiumoxid, Titanoxid, oder einem Gemisch davon, größer als 20 ist, und der nach der Kalzinierung die Röntgenbeugungslinien der Tabelle 3 aufweist:
**TABELLE 3**
| 2 Theta (°)^{(a)} | d-Abstand (Å) | Intensität I/I₀ |
|---|---|---|
| 7,7 | 11,5 | VS |
| 8,8 | 10,0 | VS |
| 14,7 | 6,02 | M |
| 15,55 | 5,69 | W |
| 17,65 | 5,02 | W |
| 20,8 | 4,27 | W |
| 23,10 | 3,85 | VS |
| 24,4 | 3,65 | M |
| 26,65 | 3,34 | W |
| 30,25 | 2,95 | W |
| 45,25 | 2,00 | W |
| | | |
|---|---|---|
| ^{(a)} ± 0,15 | | |

2. Zeolith nach Anspruch 1, wobei die Oxide Siliciumoxid und Aluminiumoxid umfassen.

3. Zeolith nach Anspruch 1, wobei das Oxid (1) Siliciumoxid umfasst.

4. Zeolith nach Anspruch 1, wobei die Oxide umfassen: (1) ein Oxid, ausgewählt aus Siliciumoxid, Germaniumoxid und Gemischen davon, und (2) Boroxid oder eine Kombination von Boroxid und Aluminiumoxid, Galliumoxid, Indiumoxid, Titanoxid, oder einem Gemisch davon.

5. Zeolith nach Anspruch 1, wobei die Oxide Siliciumoxid und Boroxid umfassen.

6. Zeolith nach Anspruch 1, welcher vorwiegend in der Wasserstoffform vorliegt.

7. Zeolith nach Anspruch 1, welcher im Wesentlichen keine Azidität aufweist.

8. Zeolith nach Anspruch 1 mit einer Zusammensetzung, wie synthetisiert und im wasserfreien Zustand, ausgedrückt als Molverhältnisse wie folgt:
YO₂/W_{c}O_{d} 20 - ∞
M_{2/n}/YO₂ 0,01 - 0,03
Q/YO₂ 0,02 - 0,05
wobei Y Silicium, Germanium oder ein Gemisch davon ist, W Bor, Aluminium, Gallium, Indium, Titan oder ein Gemisch davon ist, c gleich 1 oder 2 ist, d gleich 2 ist, wenn c gleich 1 ist oder d gleich 3 oder 5 ist, wenn c gleich 2 ist; M ein Alkalimetallkation, Erdalkalimetallkation oder Gemische davon ist; n die Wertigkeit von M angibt; und Q ein N-Butyl-N-cyclohexylpyrrolidinium-Kation N-Propyl-N-cycloheptylpyrrolidinium-Kation oder N-Butyl-N-cyclooctylpyrrolidinium-Katium ist.

9. Zeolih nach Anspruch 8, wobei die Oxide Siliciumoxid und Aluminiumoxid umfassen.

10. Zeolith nach Anspruch 8, wobei YO₂/W_{c}O_{d} gleich ∞ ist.

11. Zeolith nach Anspruch 8, wobei Y Silicium, Germanium oder ein Gemisch davon ist, und W Bor oder eine Kombination von Bor und Aluminium, Gallium, Indium, Titan oder einem Gemisch davon ist.

12. Zeolith nach Anspruch 11, wobei W Bor und Y Silicium ist.

13. Verfahren zur Herstellung eines Zeoliths nach Anspruch 1 mit einem Molverhältnis größer als 20 von (1) einem Oxid, ausgewählt aus Siliciumoxid, Germaniumoxid und Gemischen davon, zu (2) einem Oxid, ausgewählt aus Boroxid, Aluminiumoxid, Galliumoxid, Indiumoxid, Titanoxid, oder einem Gemisch davon, wobei das Verfahren umfasst, das Zusammenbringen von Quellen für diese Oxide und einem Matrizenmittel, welches ein N-Butyl-N-cyclohexylpyrrolidinium-Kation, N-Propyl-N-cycloheptylpyrrolidinium-Kation oder N-Butyl-N-cyclooctylpyrrolidinium-Katium umfasst, unter Kristallisationsbedingungen.

14. Verfahren nach Anspruch 13, wobei die Oxide umfassen: (1) ein Oxid, ausgewählt aus Siliciumoxid, Germaniumoxid und Gemischen davon, und (2) Boroxid oder eine Kombination von Boroxid und Aluminiumoxid, Galliumoxid, Indiumoxid, Titanoxid, oder einem Gemisch davon.

15. Verfahren nach Anspruch 13, wobei das kristalline Material nach der Kalzinierung die Röntgenbeugungslinien der Tabelle 3 oben aufweist.

16. Verfahren nach Anspruch 13, wobei das Matrizenmittel ein N-Butyl-N-cyclohexylpyrrolidinium-Kation ist.

17. Verfahren nach Anspruch 13, wobei das Matrizenmittel ein N-Propyl-N-cycloheptylpyrrolidinium-Kation ist.

18. Verfahren nach Anspruch 13, wobei das Matrizenmittel ein N-Butyl-N-cyclooctylpyrrolidinium-Kation ist.

19. Verfahren zum Umwandeln von Kohlenwasserstoffen, umfassend das Zusammenbringen einer Kohlenwasserstoff-Beschickung mit einem Katalysator, welcher einen Zeolith nach Anspruch 1 umfasst, unter Kohlenwasserstoff-Umwandlungsbedingungen.

20. Verfahren nach Anspruch 19, wobei der Zeolith im Wesentlichen keine Azidität aufweist.

21. Verfahren nach Anspruch 19, nämlich ein Hydrocrack-Verfahren, umfassend das Zusammenbringen des Katalysators mit einer Kohlenwasserstoff-Beschickung unter Hydrocrackbedingungen.

22. Verfahren nach Anspruch 19, nämlich ein Entwachsungsverfahren, umfassend das Zusammenbringen des Katalysators mit einer Kohlenwasserstoff-Beschickung unter Entwachsungsbedingungen.

23. Verfahren nach Anspruch 19, nämlich ein Verfahren zum Verbessern des Viskositätsindexes eines entwachsten Produktes wachsartiger Kohlenwasserstoff-Beschickungen, umfassend das Zusammenbringen des Katalysators mit einer wachsartigen Kohlenwasserstoff-Beschickung unter Isomerisierungs-Entwachsungsbedingungen.

24. Verfahren nach Anspruch 19, nämlich ein Verfahren zur Herstellung eines C₂₀₊-Schmieröls aus einer C₂₀₊-Olefinbeschickung, umfassend das Isomerisieren der Olefinbeschickung über dem Katalysator unter Isomerisierungsbedingungen.

25. Verfahren nach Anspruch 24, wobei der Katalysator zudem mindestens ein Gruppe-VIII-Metall umfasst.

26. Verfahren nach Anspruch 19, nämlich ein Verfahren zum katalytischen Entwachsen einer Kohlenwasserstofföl-Beschickung, die oberhalb von etwa 177°C (350°F) siedet und gerade und leicht verzweigte Kohlenwasserstoffketten enthält, umfassend das Zusammenbringen der Kohlenwasserstofföl-Beschickung mit dem Katalysator in Gegenwart von hinzugefügtem Wasserstoffgas bei einem Wasserstoffdruck von 15 - 3000 psi (0,10 - 20,7 MPa) unter Entwachsungsbedingungen.

27. Verfahren nach Anspruch 26, wobei der Katalysator zudem mindestens ein Gruppe-VIII-Metall umfasst.

28. Verfahren nach Anspruch 26, wobei der Katalysator einen schichtförmigen Katalysator umfasst mit einer ersten Schicht, welche den Zeolith und mindestens ein Gruppe-VIII-Metall umfasst, und einer zweiten Schicht, welche einen Aluminosilicat-Zeolith umfasst, der formselektiver als der Zeolith der ersten Schicht ist.

29. Verfahren nach Anspruch 19, nämlich ein Verfahren zur Herstellung eines Schmieröls, umfassend:
Hydrocracken einer Kohlenwasserstoff-Beschickung in einem Hydrocrack-Bereich, so dass ein Abstrom erhalten wird, der ein Hydrocrack-Öl enthält; und
katalytisches Entwachsen des Abstroms, der das Hydrocrack-Öl enthält, bei einer Temperatur von mindestens 204°C (400°F) und einem Überdruck von 15 psi bis etwa 3000 psi (0,10 bis 20,7 MPa) in Gegenwart von hinzu gefügtem Wasserstoffgas, mit dem Katalysator.

30. Verfahren nach Anspruch 29, wobei der Katalysator zudem mindestens ein Gruppe-VIII-Metall umfasst.

31. Verfahren nach Anspruch 19, nämlich ein Verfahren zum Isomerisierungs-Entwachsen eines Raffinats, umfassend das Zusammenbringen des Raffinats mit dem Katalysator in Gegenwart von zugefügtem Wasserstoff unter Isomerisierungs-Entwachsungsbedingungen.

32. Verfahren nach Anspruch 31, wobei der Katalysator zudem mindestens ein Gruppe-VIII-Metall umfasst.

33. Verfahren nach Anspruch 31, wobei das Raffinat Brightstock ist.

34. Verfahren nach Anspruch 19, nämlich ein Verfahren zum Erhöhen der Oktanzahl einer Kohlenwasserstoff-Beschickung, so dass ein Produkt mit einem größeren Aromatengehalt erzeugt wird, umfassend das Zusammenbringen einer Kohlenwasserstoff-Beschickung, welche normale und leicht verzweigte Kohlenwasserstoffe mit einem Siedebereich oberhalb von 40°C und unterhalb von 200°C umfasst, mit dem Katalysator unter Aromaten-Umwandlungsbedingungen.

35. Verfahren nach Anspruch 34, wobei der Zeolith im Wesentlichen säurefrei ist.

36. Verfahren nach Anspruch 34, wobei der Zeolith eine Gruppe-VIII-MetallKomponente umfasst.

37. Verfahren nach Anspruch 19, nämlich ein katalytisches Crack-Verfahren, umfassend das Zusammenbringen einer Kohlenwasserstoff-Beschickung mit dem Katalysator in einem Reaktionsbereich unter katalytischen Crackbedingungen in Abwesenheit von zugefügtem Wasserstoff.

38. Verfahren nach Anspruch 37, wobei der Katalysator zudem eine großporige kristalline Crack-Komponente umfasst.

39. Verfahren nach Anspruch 19, nämlich ein Isomerisierungsverfahren zum Isomerisieren von C₄- bis C₇-Kohlenwasserstoffen, umfassend das Zusammenbringen einer Beschickung, die normale und leicht verzweigte C₄- bis C₇-Kohlenwasserstoffe enthält, mit dem Katalysator unter Isomerisierungsbedingungen.

40. Verfahren nach Anspruch 39, wobei der Zeolith mit mindestens einem Gruppe-VIII-Metall diffusionsbeschichtet ist.

41. Verfahren nach Anspruch 39, wobei der Katalysator nach der Diffusionsbeschichtung mit dem Gruppe-VIII-Metall in einem Dampf-Luft-Gemisch bei erhöhter Temperatur kalziniert wird.

42. Verfahren nach Anspruch 40, wobei das Gruppe-VIII-Metall Platin ist.

43. Verfahren nach Anspruch 19, nämlich ein Verfahren zum Alkylieren eines aromatischen Kohlenwasserstoffes, umfassend das Zusammenbringen von mindestens einem molaren Überschuss eines aromatischen Kohlenwasserstoffes mit einem C₂- bis C₂₀-Olefin in Gegenwart des Katalysators unter Alkylierungsbedingungen sowie unter zumindest partiellen Flüssigphase-Bedingungen.

44. Verfahren nach Anspruch 43, wobei das Olefin ein C₂- bis C₄-Olefin ist.

45. Verfahren nach Anspruch 44, wobei der aromatische Kohlenwasserstoff und das Olefin in einem Molverhältnis von 4:1 bis 20:1 vorliegen.

46. Verfahren nach Anspruch 44, wobei der aromatische Kohlenwasserstoff ausgewählt ist aus Benzol, Toluol, Ethylbenzol, Xylol, Naphthalin, NaphthalinDerivaten, Dimethylnaphthalin oder Gemischen davon.

47. Verfahren nach Anspruch 19, nämlich ein Verfahren zum Transalkylieren eines aromatischen Kohlenwasserstoffes, umfassend das Zusammenbringen eines aromatischen Kohlenwasserstoffes mit einem polylalkylaromatischen Kohlenwasserstoff in Gegenwart des Katalysators unter Transalkylierungsbedingungen sowie unter zumindest partiellen Flüssigphase-Bedingungen.

48. Verfahren nach Anspruch 47, wobei der aromatische Kohlenwasserstoff und der polyalkylaromatische Kohlenwasserstoff in einem Molverhältnis von 1:1 bis zu 25:1 vorliegen.

49. Verfahren nach Anspruch 47, wobei der aromatische Kohlenwasserstoff ausgewählt ist aus Benzol, Toluol, Ethylbenzol, Xylol oder Gemischen davon.

50. Verfahren nach Anspruch 47, wobei der polyalkylaromatische Kohlenwasserstoff ein Dialkylbenzol ist.

51. Verfahren nach Anspruch 19, nämlich ein Verfahren zur Umwandlung von Paraffinen in Aromaten, umfassend das Zusammenbringen von Paraffinen mit einem Katalysator, welcher den Zeolith und Gallium, Zink oder eine Gallium- oder Zinkverbindung umfasst, unter Bedingungen, bei denen Paraffine in Aromaten umgewandelt werden.

52. Verfahren nach Anspruch 19, nämlich ein Verfahren zum Isomerisieren von Olefinen, umfassend das Zusammenbringen des Olefins mit dem Katalysator unter Bedingungen, die die Isomerisierung des Olefins bewirken.

53. Verfahren nach Anspruch 19, nämlich ein Verfahren zum Isomerisieren einer Isomerisierungsbeschickung, welche einen aromatischen C₈-Strom von Xylolisomeren oder Gemische von Xylolisomeren und Ethylbenzol umfasst, wobei ein Verhältnis von ortho-, meta- und para-Xylolen erhalten wird, das noch näher am Gleichgewicht ist, umfassend das Zusammenbringen der Beschickung mit dem Katalysator unter Isomerisierungsbedingungen.

54. Verfahren nach Anspruch 19, nämlich ein Verfahren zum Oligomerisieren von Olefinen, umfassend das Zusammenbringen einer Olefinbeschickung mit dem Katalysator unter Oligomerisierungsbedingungen.

55. Verfahren zum Umwandeln von Niederalkoholen und anderen oxygenierten Kohlenwasserstoffen, umfassend das Zusammenbringen des Niederalkohols oder anderen oxygenierten Kohlenwasserstoffs mit einem Katalysator, umfassend den Zeolith nach Anspruch 1, unter Bedingungen, bei denen flüssige Produkte erhalten werden.

56. Verfahren nach Anspruch 19, nämlich ein Verfahren zur Produktion von höhermolekularen Kohlenwasserstoffen aus niedermolekularen Kohlenwasserstoffen, umfassend die Schritte:
(a) Einführen eines niedermolekularen kohlenwasserstoffhaltigen Gases in einen Reaktionsbereich, und Zusammenbringen des Gases in dem Bereich unter C₂₊-Kohlenwasserstoff-Synthesebedingungen mit dem Katalysator und einem Metall oder einer Metallverbindung, die den niedermolekularen Kohlenwasserstoff in einen höhermolekularen Kohlenwasserstoff umwandeln kann; und
(b) Entnehmen eines höhermolekularen Kohlenwasserstoffstroms aus dem Reaktionsbereich.

57. Verfahren nach Anspruch 56, wobei das Metall oder die Metallverbindung ein Lanthaniden- oder Aktinidenmetall oder eine -Metallverbindung umfasst.

58. Verfahren nach Anspruch 56, wobei der niedermolekulare Kohlenwasserstoff Methan ist.

59. Verfahren nach Anspruch 19, 21, 22, 23, 24, 26, 29, 31, 37, 39, 43 oder 47, wobei der Zeolith vorwiegend in der Wasserstoffform vorliegt.

60. Verfahren zum Reduzieren der in einem Gasstrom enthaltenen Stickoxide in Gegenwart von Sauerstoff, umfassend das Zusammenbringen des Gasstroms mit einem Zeolith nach Anspruch 1.

61. Verfahren nach Anspruch 60, wobei der Zeolith ein Metall oder Metallionen enthält, welche die Reduktion der Stickoxide katalysieren können.

62. Verfahren nach Anspruch 61, wobei das Metall Kupfer, Kobalt oder Gemische davon ist.

63. Verfahren nach Anspruch 61, wobei der Gasstrom der Abgasstrom eines Verbrennungsmotors ist.

## Revendications

1. Zéolite ayant un rapport molaire supérieur à 20 (1) d'un oxyde choisi entre l'oxyde de silicium, l'oxyde de germanium et leurs mélanges à (2) un oxyde choisi entre l'oxyde de bore, l'oxyde d'aluminium, l'oxyde de gallium, l'oxyde d'indium, l'oxyde de titane ou un de leurs mélanges, et ayant, après calcination, les raies de diffraction des rayons X du tableau 3 :
**Tableau 3**
| Deux théta (deg.)^{(a)} | distance-d (Å) | Intensité I/I₀ |
|---|---|---|
| 7,7 | 11,5 | très intense |
| 8,8 | 10,0 | très intense |
| 14,7 | 6,02 | moyen |
| 15,55 | 5,69 | faible |
| 17,65 | 5,02 | faible |
| 20,8 | 4,27 | faible |
| 23,10 | 3,85 | très intense |
| 24,4 | 3,65 | moyen |
| 26,65 | 3,34 | faible |
| 30,25 | 2,95 | faible |
| 45,25 | 2,00 | faible |
| | | |
|---|---|---|
| ^{(a)} ± 0,15 | | |

2. Zéolite suivant la revendication 1, dans laquelle les oxydes comprennent l'oxyde de silicium et l'oxyde d'aluminium.

3. Zéolite suivant la revendication 1, dans laquelle l'oxyde (1) comprend l'oxyde de silicium.

4. Zéolite suivant la revendication 1, dans laquelle les oxydes comprennent (1) un oxyde choisi entre l'oxyde de silicium, l'oxyde de germanium et leurs mélanges et (2) l'oxyde de bore ou une association d'oxyde de bore et d'oxyde d'aluminium, l'oxyde de gallium, l'oxyde d'indium, l'oxyde de titane ou un de leurs mélanges.

5. Zéolite suivant la revendication 1, dans laquelle les oxydes comprennent l'oxyde de silicium et l'oxyde de bore.

6. Zéolite suivant la revendication 1, ladite zéolite étant principalement sous forme hydrogène.

7. Zéolite suivant la revendication 1, ladite zéolite étant dépourvue d'acidité.

8. Zéolite suivant la revendication 1, ayant une composition, telle que synthétisée et à l'état anhydre, en termes de rapports molaires comme suit :
YO₂/W_{c}O_{d} 20-∝
M_{2/n}/YO₂ 0,01-0,03
Q/YO₂ 0,02-0,05
où Y représente le silicium, le germanium ou un de leurs mélanges ; W représente le bore, l'aluminium, le gallium, l'indium, le titane ou un de leurs mélanges ; c est égal à 1 ou 2 ; d est égal à 2 lorsque c est égal à 1 ou d est égal à 3 ou 5 lorsque c est égal à 2 ; M représente un cation de métal alcalin, un cation de métal alcalino-terreux ou leurs mélanges ; n représente la valence de M ; et Q comprend un cation N-butyl-N-cyclohexylpyrrolidinium, un cation N-propyl-N-cycloheptylpyrrolidinium ou un cation N-butyl-N-cyclooctylpyrrolidinium.

9. Zéolite suivant la revendication 8, dans laquelle les oxydes comprennent l'oxyde de silicium et l'oxyde d'aluminium.

10. Zéolite suivant la revendication 8, dans laquelle le rapport YO₂/W_{c}O_{d} est égal à ∞.

11. Zéolite suivant la revendication 8, dans laquelle Y représente le silicium, le germanium ou un de leurs mélanges et W représente le bore ou une association de bore et d'aluminium, le gallium, l'indium, le titane ou un de leurs mélanges.

12. Zéolite suivant la revendication 11, dans laquelle W représente le bore et Y représente le silicium.

13. Procédé pour la préparation d'une zéolite suivant la revendication, ayant un rapport molaire supérieur à 20 (1) d'un oxyde choisi entre l'oxyde de silicium, l'oxyde de germanium et leurs mélanges à (2) un oxyde choisi entre l'oxyde de bore, l'oxyde d'aluminium, l'oxyde de gallium, l'oxyde d'indium, l'oxyde de titane ou un de leurs mélanges, ledit procédé comprenant la mise en contact, dans des conditions de cristallisation, de sources desdits oxydes et d'un agent servant de modèle comprenant un cation N-butyl-N-cyclohexylpyrrolidinium, un cation N-propyl-N-cycloheptylpyrrolidinium ou un cation N-butyl-N-cyclooctylpyrrolidinium.

14. Procédé suivant la revendication 13, dans lequel les oxydes comprennent (1) un oxyde choisi entre l'oxyde de silicium, l'oxyde de germanium et leurs mélanges et (2) l'oxyde de bore ou une association d'oxyde de bore et d'oxyde d'aluminium, l'oxyde de gallium, l'oxyde d'indium, l'oxyde de titane ou un de leurs mélanges.

15. Procédé suivant la revendication 13, dans lequel la matière cristalline a, après calcination, les raies de diffraction des rayons X du tableau 3 ci-dessus.

16. Procédé suivant la revendication 13, dans lequel l'agent servant de modèle est un cation N-butyl-N-cyclohexylpyrrolidinium.

17. Procédé suivant la revendication 13, dans lequel l'agent servant de modèle est un cation N-propyl-N-cycloheptylpyrrolidinium.

18. Procédé suivant la revendication 13, dans lequel l'agent servant de modèle est un cation N-butyl-N-cyclooctylpyrrolidinium.

19. Procédé pour la conversion d'hydrocarbures, comprenant la mise en contact d'une charge hydrocarbonée d'alimentation dans des conditions de conversion d'hydrocarbures avec un catalyseur comprenant une zéolite suivant la revendication 1.

20. Procédé suivant la revendication 19, dans lequel la zéolite est dépourvue d'acidité.

21. Procédé suivant la revendication 19, qui est un procédé d'hydrocraquage comprenant la mise en contact du catalyseur avec une charge d'hydrocarbures d'alimentation dans des conditions d'hydrocraquage.

22. Procédé suivant la revendication 19, qui est un procédé de déparaffinage comprenant la mise en contact du catalyseur avec une charge d'hydrocarbures d'alimentation dans des conditions de déparaffinage.

23. Procédé suivant la revendication 19, qui est un procédé pour améliorer l'indice de viscosité d'un produit déparaffiné de charges d'hydrocarbures paraffiniques d'alimentation, comprenant la mise en contact du catalyseur avec une charge d'hydrocarbures paraffiniques d'alimentation dans des conditions de déparaffinage par isomérisation.

24. Procédé suivant la revendication 19, qui est un procédé pour produire une huile lubrifiante en C₂₀₊ à partir d'une charge oléfinique d'alimentation en C₂₀₊, comprenant l'isomérisation de ladite charge oléfinique d'alimentation dans des conditions d'isomérisation sur le catalyseur.

25. Procédé suivant la revendication 24, dans lequel le catalyseur comprend en outre au moins un métal du Groupe VIII.

26. Procédé suivant la revendication 19, qui est un procédé pour le déparaffinage catalytique d'une charge d'huile hydrocarbonée d'alimentation bouillant au-delà de 350°CF (177°C) et contenant des hydrocarbures à chaîne droite et des hydrocarbures à chaîne légèrement ramifiée, comprenant la mise en contact de ladite charge d'huile hydrocarbonée d'alimentation en présence d'hydrogène gazeux ajouté à une pression d'hydrogène de 15 à 3000 psi (0,10 à 20,7 MPa) dans des conditions de déparaffinage avec le catalyseur.

27. Procédé suivant la revendication 26, dans lequel le catalyseur comprend en outre au moins un métal du Groupe VIII.

28. Procédé suivant la revendication 26, dans lequel ledit catalyseur comprend un catalyseur stratifié comprenant une première couche comprenant la zéolite et au moins un métal du Groupe VIII, et une seconde couche comprenant une zéolite du type aluminosilicate qui présente une plus grande sélectivité de forme que la zéolite de ladite première couche.

29. Procédé suivant la revendication 19, qui est un procédé pour la préparation d'une huile lubrifiante, qui comprend :
l'hydrocraquage dans une zone d'hydrocraquage d'une charge hydrocarbonée d'alimentation pour obtenir un effluent comprenant une huile hydrocraquée ; et
le déparaffinage catalytique dudit effluent comprenant l'huile hydrocraquée à une température d'au moins 400°C (204°C) et à pression manométrique de 15 psi (0,10 MPa) à 3000 psi (20,7 MPa) en présence d'hydrogène gazeux ajouté avec le catalyseur.

30. Procédé suivant la revendication 29, dans lequel le catalyseur comprend en outre au moins un métal du Groupe VIII.

31. Procédé suivant la revendication 19, qui est un procédé pour le déparaffinage isomérisant d'un raffinat, comprenant la mise en contact dudit raffinat en présence d'hydrogène ajouté dans des conditions de déparaffinage isomérisant avec le catalyseur.

32. Procédé suivant la revendication 31, dans lequel le catalyseur comprend en outre au moins un métal du Groupe VIII.

33. Procédé suivant la revendication 31, dans lequel le raffinat est une huile lubrifiante de haute viscosité "bright stock".

34. Procédé suivant la revendication 19, qui est un procédé pour augmenter l'indice d'octane d'une charge d'hydrocarbures d'alimentation afin de former un produit ayant une teneur accrue en composés aromatiques, comprenant la mise en contact d'une charge hydrocarbonée d'alimentation qui comprend des hydrocarbures normaux et hydrocarbures légèrement ramifiés ayant une plage d'ébullition supérieure à 40°C et inférieure à 200°C dans des conditions de conversion en composés aromatiques avec le catalyseur.

35. Procédé suivant la revendication 34, dans lequel la zéolite est dépourvue d'acidité.

36. Procédé suivant la revendication 34, dans lequel la zéolite contient un constituant métallique du Groupe VIII.

37. Procédé suivant la revendication 19, qui est un procédé de craquage catalytique, comprenant la mise en contact d'une charge d'hydrocarbures d'alimentation dans une zone réactionnelle dans des conditions de craquage catalytique en l'absence d'hydrogène ajouté avec le catalyseur.

38. Procédé suivant la revendication 37, dans lequel le catalyseur comprend en outre un constituant de craquage cristallin à larges pores.

39. Procédé suivant la revendication 19, qui est un procédé d'isomérisation pour isomériser des hydrocarbures en C₄ à C₇, comprenant la mise en contact d'une charge d'alimentation comprenant des hydrocarbures en C₄ à C₇ normaux et légèrement ramifiés dans des conditions d'isomérisation avec le catalyseur.

40. Procédé suivant la revendication 39, dans lequel la zéolite a été imprégnée d'au moins un métal du Groupe VIII.

41. Procédé suivant la revendication 39, dans lequel le catalyseur a été calciné dans un mélange vapeur d'eau/air à une température élevée après imprégnation avec le métal du Groupe VIII.

42. Procédé suivant la revendication 40, dans lequel le métal du Groupe VIII est le platine.

43. Procédé suivant la revendication 19, qui est un procédé pour alkyler un hydrocarbure aromatique, qui comprend la mise en contact dans des conditions d'alkylation d'au moins un excès molaire d'un hydrocarbure aromatique avec une oléfine en C₂ à C₂₀ dans des conditions de phase liquide au moins partielle et en présence du catalyseur.

44. Procédé suivant la revendication 43, dans lequel l'oléfine est une oléfine en C₂ à C₄.

45. Procédé suivant la revendication 44, dans lequel l'hydrocarbure aromatique et l'oléfine sont présents en un rapport molaire, respectivement de 4:1 à 20:1.

46. Procédé suivant la revendication 44, dans lequel l'hydrocarbure aromatique est choisi dans le groupe consistant en le benzène, le toluène, l'éthylbenzène, le xylène, le naphtalène, des dérivés de naphtalène, le diméthyl-naphtalène et leurs mélanges.

47. Procédé suivant la revendication 19, qui est un procédé pour la transalkylation d'un hydrocarbure aromatique, qui comprend la mise en contact dans des conditions de transalkylation d'un hydrocarbure aromatique avec un hydrocarbure polyalkyle aromatique dans des conditions de phase liquide au moins partielle et en présence du catalyseur.

48. Procédé suivant la revendication 47, dans lequel l'hydrocarbure aromatique et l'hydrocarbure polyalkyle aromatique sont présents en un rapport molaire, respectivement de 1:1 à 25:1.

49. Procédé suivant la revendication 47, dans lequel l'hydrocarbure aromatique est choisi dans le groupe consistant en le benzène, le toluène, l'éthylbenzène, le xylène et leurs mélanges.

50. Procédé suivant la revendication 47, dans lequel l'hydrocarbure polyalkyle aromatique est un dialkylbenzène.

51. Procédé suivant la revendication 19, qui est un procédé pour convertir des paraffines en des composés aromatiques, qui comprend la mise en contact de paraffines dans des conditions qui provoquent la conversion des paraffines en composés aromatiques avec un catalyseur comprenant la zéolite et du gallium, du zinc ou un composé de gallium ou de zinc.

52. Procédé suivant la revendication 19, qui est un procédé pour l'isomérisation d'oléfines, comprenant la mise en contact d'une telle oléfine dans des conditions qui provoquent l'isomérisation de l'oléfine avec le catalyseur.

53. Procédé suivant la revendication 19, qui est un procédé pour l'isomérisation d'une charge d'isomérisation comprenant un courant aromatique en C8 d'isomères du xylène ou de mélanges d'isomères du xylène et d'éthylbenzène, dans lequel un rapport plus proche de l'équilibre des ortho-, méta- et paraxylènes est obtenu, ledit procédé comprenant la mise en contact de ladite charge d'alimentation dans des conditions d'isomérisation avec le catalyseur.

54. Procédé suivant la revendication 19, qui est un procédé pour l'oligomérisation d'oléfines, comprenant la mise en contact d'une charge oléfinique d'alimentation dans des conditions d'oligomérisation avec le catalyseur.

55. Procédé pour convertir des alcools inférieurs et d'autres hydrocarbures oxygénés, comprenant la mise en contact d'un tel alcool inférieur ou autre hydrocarbure oxygéné dans des conditions pour former des produits liquides avec un catalyseur comprenant une zéolite suivant la revendication 1.

56. Procédé suivant la revendication 19, qui est un procédé pour la production d'hydrocarbures de poids moléculaire plus élevé à partir d'hydrocarbures de poids moléculaire plus bas, comprenant les étapes consistant à :
(a) introduire dans une zone réactionnelle un gaz contenant des hydrocarbures de poids moléculaire plus bas et mettre en contact ledit gaz dans ladite zone dans des conditions de synthèse d'hydrocarbures en C2+ avec le catalyseur et un métal ou composé métallique capable de convertir l'hydrocarbure de poids moléculaire plus bas en un hydrocarbure de poids moléculaire plus élevé ; et
(b) décharger de ladite zone réactionnelle un courant contenant des hydrocarbures de poids moléculaire plus élevé.

57. Procédé suivant la revendication 56, dans lequel le métal ou composé métallique comprend un métal ou composé de métal faisant partie des lanthanides ou actinides.

58. Procédé suivant la revendication 56, dans lequel l'hydrocarbure de poids moléculaire plus bas est le méthane.

59. Procédé suivant la revendication 19, 21, 22, 23, 24, 26, 29,31, 37, 39, 43, 47, dans lequel la zéolite est principalement sous forme d'hydrogène.

60. Procédé pour la réduction d'oxydes d'azote présents dans un courant gazeux en présence d'oxygène, ledit procédé comprenant la mise en contact du courant gazeux avec une zéolite suivant la revendication 1.

61. Procédé suivant la revendication 60, dans lequel ladite zéolite contient un métal ou des ions métalliques capables de catalyser la réduction des oxydes d'azote.

62. Procédé suivant la revendication 61, dans lequel le métal est le cuivre, le cobalt ou leurs mélanges.

63. Procédé suivant la revendication 61, dans lequel le courant gazeux est le courant d'échappement d'un moteur à combustion interne.
